# EUROPEAN PATENT SPECIFICATION

(11) **EP 3 450 574 B1**
(45) Date of publication and mention of the grant of the patent: **20.04.2022**
(21) Application number: 17188678.1
(22) Date of filing: 31.08.2017
(51) Int. Cl.: C14C 15/00, C14C 11/00, C09D 175/04, D06P 5/30, B41J 2/01, B41J 11/00, B41J 3/407, B41M 5/00

(54) **INKJET PRINTING ON NATURAL LEATHER**
TINTENSTRAHLDRUCK AUF NATÜRLICHEM LEDER
IMPRESSION À JET D'ENCRE SUR CUIR NATUREL

(43) Date of publication of application: 06.03.2019
(73) Proprietor: AGFA NV, 2640 Mortsel (BE)
(72) Inventor: VAN DORPE, Jurgen, 2640 Mortsel (BE); STRIJCKERS, Hans, 2640 Mortsel (BE); VAN GARSSE, Joris, 2640 Mortsel (BE)
(74) Representative: Strijckers, Hans Louis P.

(56) References cited:
- US-A1- 2005 206 711
- US-A1- 2005 278 905
- DATABASE WPI Week 200424 Thomson Scientific, London, GB; AN 2004-250498 XP002777850, & JP 2003 336179 A (HASHIMOTO SHITSUGEI YG) 28 November 2003 (2003-11-28)
- DATABASE WPI Week 199719 Thomson Scientific, London, GB; AN 1997-209694 XP002777851, & JP H09 59700 A (ASAHI GLASS CO LTD) 4 March 1997 (1997-03-04)

## Description

### Technical Field

The present invention relates to an inkjet printing method on natural leather by a digital leather printer, especially in a decorative natural leather manufacturing line.

### Background Art

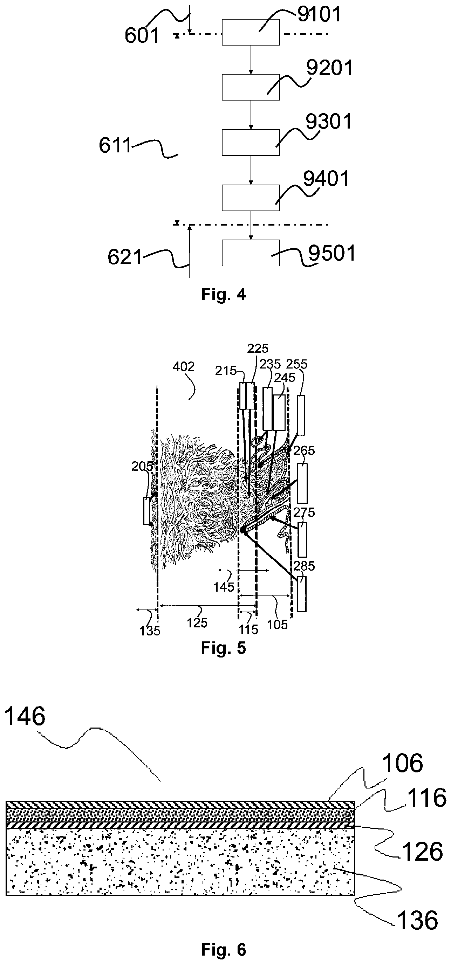

The manufacturing of natural leather articles is well known and can generally be split up in five phases as shown by Figure 4. The preparatory phase 1 (9101) often occurs partly in a slaughterhouse (601) and partly in a tannery (611), while phases 2 to 4 (9201, 9301, 9401) occur in the tannery (611) and phase 5 (9501) occurs at a leather article manufacturer. In a first phase, the preparatory phase (9101), the skin is removed from the animal (flaying) to have a rawhide, which is then pre-treated for the second phase of tanning. The pre-treatment may involve processes such as soaking, liming, unhairing, splitting and pickling (adjusting pH for assisting penetration of tanning agents). In the tanning phase (9201), the protein of the rawhide is converted into a stable material that will not putrefy. Chrome is most frequently used as tanning agent whereby the tanned product obtains a pale blue colour, therefore commonly called "wet blue". In the third phase of crusting (9301), the tanned natural leather is dried and softened. The crusting often includes processes such as stripping (removal of superficially fixed tannins), fat liquoring (fats, oils and waxes are fixed to the leather fibres), dyeing, whitening, physical softening, and buffing (abrasion of leather surface to reduce grain defects). In this phase, the tanned natural leather becomes crusted natural leather. In the fourth phase, called the finishing phase (9401), the leather, then called finished natural leather, is made ready for sale to leather article manufacturers (621).

Finishing operations may include lacquer coating, polishing and embossing. In the fifth phase (9205), a leather article is manufactured, involving processes, which may include cutting, perforating, sewing, leather wrapping, decoration and embossing.

Natural leather by itself is already perceived as a luxury product, but personalization and customization, for example by decoration, can further enhance a luxury feel. Finished natural leather has been decorated in the past by screen-printing, also called serigraph printing. However, screen-printing is labour intensive and for each colour, an individual screen is required. This is costly and time consuming, especially when personalization or customization is desired.

Digital printing technologies on finished natural leather have been investigated but many solutions on finished leather remain of inferior quality. Inkjet technologies employing heat transfer paper have been explored for leather printing. It was found that a process of inkjet printing dye-based decorative images onto a sheet of transfer paper and then transferring the printed decorative images onto crusted or finished natural leather by heat resulted in a quality unacceptable for many luxury leather products. Examples of such inkjet processes are disclosed in WO 01/32434 A (GILHAM) and US 2016067984 A (CHUNG).

Recently high quality decorated leather has been obtained by a method of printing "into" tanned natural leather with pigmented inks. WO 2013/135828 A (CODUS) discloses a method of printing into tanned natural leather comprising the steps of a) applying ink acceptor directly to the surface of the tanned natural leather; b) applying ink directly onto the acceptor by inkjet ; c) applying an additive to the ink; d) heating a surface of a barrier which is substantially impervious to the ink; and e) contacting the heated barrier with the ink acceptor, additive and ink on the leather surface directly to soften the additive, ink acceptor and ink into the leather such that the ink penetrates into the leather.

Inkjet printing is a non-impact printing technology wherein a marking unit, such as a printhead, is not in contact with the substrate that is printed. A physical contact of the marking unit with a substrate should be avoided because this may harm the technology of the marking unit and damage the marking unit. There is a possibility to enlarge the distance between the marking unit and the hide (402) but this result in bad print quality such as ink mist on the hide (402) or poor droplet forming on the hide (402) due do a longer landing distance of a jetted droplet.

Natural leather is a natural product available in an immense amount of variants, for example, wherein the thickness varies between hides, but also wherein the thickness varies on the hide (402) itself. Other examples are tension variations inside a hide (402) caused by grain (105), corium (125) and/or thickness of the junction between grain and corium (115) of the natural leather. Other typical causes are artery veins, hair shafts (275), hairs, epidermis (255) of the natural leather and the remaining of artery veins, hair shafts (275), hairs, epidermis (255) of the natural leather after tanning.

US2005/206711 A1 (MILINI LUIGI) discloses a method and corresponding apparatus for inkjet printing on sheet-like material, such as hides, on a conveyor belt wherein said conveyor belt has means for retaining and blocking said material. Said means may be a layer of reusable adhesive as disclosed in [0021]. Further, [0022] and [0039] disclose that to-be-printed material may be pressed with a presser roller onto the conveyor belt for better adhering. The to-be-printed material may also be supported on frames for allowing to print materials of different thickness, as disclosed in [0015]. Further, [0039] discloses that said frames may be locked to the conveyor belt.

Therefore, there is need for a solution to print natural leather by non-impact printing technology, such as inkjet technology, wherein the distance between inkjet printhead, more specific the nozzles from the inkjet printhead unit (607), and the to-be-printed natural leather can be minimized while contact of the inkjet printhead unit (607) and the to-be-printed natural leather can be avoided.

### Summary of invention

In order to overcome the problems described above, preferred embodiments of the present invention have been realised with a digital leather printer as defined by **claim 8,** which in a preferred embodiment is built in a decorative natural leather manufacturing line and/or built after a natural leather tanning line; which is normally done at a tannery (611). The present invention includes also an inkjet printing method on natural leather as defined by **claim 1,** which is preferably performed in a decorative natural leather manufacturing line and/or in a natural leather tanning line, which is normally done at a tannery (611).

In a nutshell the present invention is an inkjet printing method on natural leather, preferably performed by a digital leather printer, comprising the steps of
- positioning on a rigid support (107) a hide (402) to form a printable area, also called a decoration area; and
- clamping an edge, preferably more edges, of the natural leather below the printable area to fix the hide (402) on the rigid support (107); and
- printing on the decoration area a decorative image, such as pattern or digital photo, by one or more inkjet printheads.

The natural leather is preferably tanned leather and most preferably crusted leather (136).

The plane wherein the nozzles of the inkjet printhead unit (607) are positioned is preferably parallel to the ground, thus horizontally oriented. The decoration area and rigid support (107) is preferably parallel to the ground, thus horizontally oriented. The decoration area is faced by an inkjet printhead unit (607) or one or more inkjet printheads.

The to-be-printed hide, such as crusted natural leather or tanned natural leather, need to be hold down against the rigid support (107) so the hide (402) lays stable and unmovable on the rigid support (107) while printing. This holding-down is important to avoid incorrect registration printing due to movement of the hide (402) while printing. Incorrect registration printing causes inferior print quality. Any undesired contact between the to-be-printed hide an a print head may also lead to failing nozzles.

Due to the availability of large hides, such as originating from cows, the support has to be rigid because it has to carry such heavy hides. The present invention is especially advantageous for irregular shaped hides and more advantageous for large hides because less waste of leather is generated in the decorative natural leather manufacturing line. This is an ecological as well as an economical benefit. It is known that the tanning process has a large environmental impact of the various different tanning agents and tanning processes used in the production of tanned natural leather.

The holding down of the hide (402) is in the present invention done by a clamping unit, which clamps the edge of the hide. The clamping unit clamps the edge below the printable area to avoid that the clamping unit touches the printheads or to avoid that the distance between printheads and printable area have to be enlarged causing inferior print quality. It is found that the larger the distance between nozzles of a printhead and a printable area, the lesser the print quality on the inkjet printed hide will be. A larger distance between nozzles of a printhead and printable area may also cause ink mist and poor droplet forming from a nozzle in the printhead, for example, by a larger air-stream between nozzle and the hide (402) while hide (402) and/or inkjet printhead unit (607) moves during inkjet printing. In addition, a large throwing distance of a droplet influences the straightness of the trajectory of the droplet badly, which causes inferior print quality.

The present invention of an inkjet printing method is preferably performed by a digital leather printer, also referred to here-after as a leather inkjet printer. Digital printing of hides gives a huge amount of new possibilities of decorating hides, such as crusted natural leather or tanned natural leather, with decorative images, which are not possible by the current technology of screen-printing. The advantages of digital leather printing are short-run printing at a lower cost and the possibility of personalized decoration of hides.

The present invention is thus an inkjet printing method on natural leather comprising the steps:
a) providing a hide (402), having an edge, on a rigid support (107) for obtaining a flat decoration area of the hide (402);
b) fastening the hide (402) to the rigid support (107) by clamping the edge; and
c) jetting with a inkjet printhead unit (607), facing a side of the flat decoration area, a decorative image on the flat decoration area of the fastened hide; and
wherein the edge is clamped opposite to the side of the flat decoration area and thus outside the flat decoration area.

The to-be-printed area (flat decoration area) of the fastened hide is facing the inkjet printhead unit (607).

A **hide (402),** sometimes called animal skin, is:
- a rawhide, which is an animal skin removed from an animal. The animal skin is not be tanned;
   or
- a tanned hide, which is a rawhide that is tanned in a tannery (611). It is also called tanned natural leather or shortly tanned leather;
   or
- crusted hide, which is tanned leather that is crusted. It is also called crusted natural leather or shortly crusted leather (136).

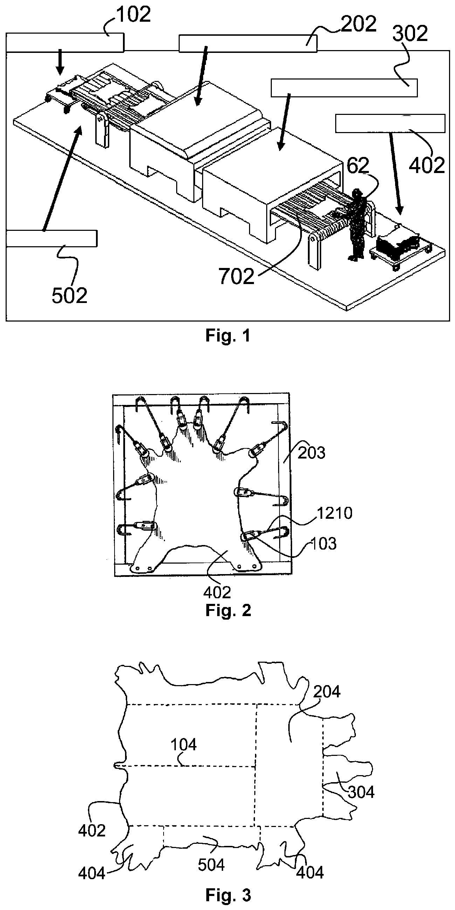

The hide (402) may also be a part of a hide such as butt (104), belly (504), neck (304), leg (404), shoulder (204) (FIG. 3). The hide (402) may also be full grain leather, top grain leather or split leather. A dictionary of leather specific vocabulary can be found on *www.leather-dictionary.com.*

The decorative image is jetted on the flat decoration area, by jetting a plurality of droplets from a nozzle, comprised in an inkjet printhead unit (607) towards the flat decoration area of the fastened hide, which results in a printed decorative image on the hide (402). The present invention guarantees a high image quality, which gives photorealistic results for the decorative image because the distance between inkjet printhead unit (607) and flat decoration area can be set to a minimum, preferably between 50 µm and 5000 µm.

The decorative image is not jetted on the flesh side of the hide (402). The flesh side is the inner surface of the hide (402), which was in contact with the animal body.

The flat decoration area is the area on the hide (402), which shall be decorated, such as in the present invention by jetting a decorative image, such as a photo or pattern. The decoration area is faced by the inkjet printhead unit (607) or one or more inkjet printheads.

The fastening in the present invention is important because it is possible that jetting a decorative image is causing that the hide (402) curls at its edges towards the inkjet printhead unit (607) or the hide (402) swells or crinkles towards the inkjet printhead by the jetted liquid.

An inkjet printhead unit (607) may comprise one or more inkjet printheads. An inkjet printhead unit (607) or inkjet printhead comprises one or more nozzles.

The clamping is performed by a clamping unit, which mechanically holds things together.

In a preferred embodiment, for enforcing the holding down and for flattening the provided hide (402) on the rigid support (107), the rigid support (107) comprises a vacuum area wherein the hide (402) is extra hold down by vacuum force and/or to ensure the flatness of the positioned hide (402) before printing and/or conveying and/or moving of the inkjet printhead unit (607) above the positioned hide (402), which is at the side of the flat decoration area.

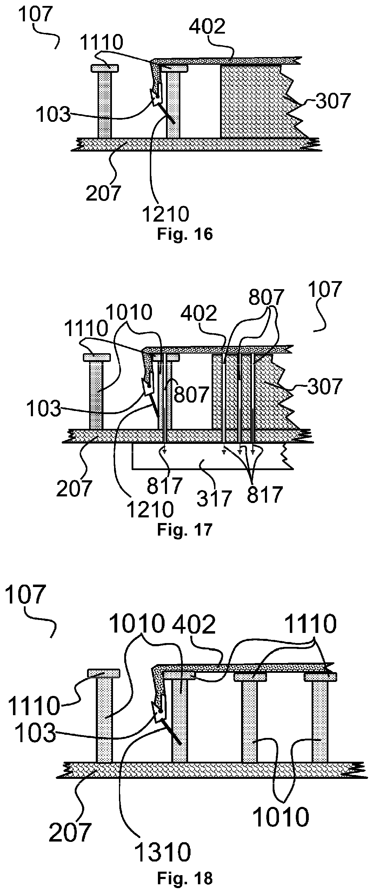

The rigid support (107) may comprise thus one or more apertures, also called vacuum holes, which are connected via air channels to one or more vacuum pumps (See FIG. 17, FIG. 28, FIG. 34). A vacuum pump provides a vacuum pressure inside a vacuum chamber (317) and is connected by a vacuum pump connector, such as a tube, to a vacuum pump input such as aperture in the vacuum chamber (317). Between the vacuum pump connector, a vacuum controller, such as a valve or a tap, may be provided to control the vacuum in the vacuum chamber (317) wherein the aperture is positioned.

To prevent contamination, such as hide fibres, ink, ink residues and/or ink debris such as cured ink, to contaminate via the set of air-channels from the rigid support (107) the interior means of the vacuum pump, a filter, such as an air filter and/or coalescence filter, may be connected to the vacuum pump connector. Preferably a coalescence filter as filter is connected to the vacuum pump connector to split liquid and air from the contamination in the vacuum pump connector.

The vacuum setting in the vacuum chamber (317) in the present invention is preferably selected between -20 mbar and -80 mbar, more preferably - 30 mbar and -60 mbar to have a workable digital leather printer wherein the provided hide is hold down and/or flattened towards the rigid support (107).

The clamping unit may comprise one clamp or a plurality of clamps whereof each clamp clamps an edge of the hide. The hide (402) is preferably clamped around the total edge of the hide by a plurality of clamping units. The number of clamping units from the plurality of clamping units is preferably more than 2, more preferably more than 3 and most preferably more than 5. The maximum amount of clamping units depends on the size and perimeter of the hide (402) but preferably less than 200, more preferably less than 100, most preferably less than 50. If the amount of clamps is too high, the time for mounting the hide (402) on the rigid support (107) takes too long, which is economically not interesting for a decorative natural leather manufacturing line.

The holding down of the hide (402) and the clamping opposite to the side of the flat decoration area makes it possible that the distance between the inkjet printhead unit (607), more specific the nozzles of the inkjet printhead unit (607), can be advantageous minimized which guarantees a better print quality such as decorative image sharpness. The perpendicular distance between a nozzle of the inkjet printhead unit (607) and the decoration area is preferably from 100 µm to 10000 µm, more preferably from 300 µm to 5000 µm, most preferably from 700 µm to 3000 µm.

The inkjet printing method may be performed by the following embodiment of the present invention:
A digital leather printer, preferably an UV inkjet printer, comprising
- a rigid support (107) for supporting a hide (402), and obtaining a decoration area of the hide (402); and
- a clamping unit for fastening the hide (402) to the rigid by clamping an edge of the hide; and
- an inkjet printhead unit (607), facing a side of the decoration area; and wherein the clamping unit is positioned on the opposite side of the flat decoration area. The flat decoration area is facing the inkjet printhead unit (607), which may comprise one or more inkjet print heads.

The hide (402) may be rawhide but preferably, tanned hide and more preferably crusted hide, also called crusted leather (136) or crusted natural leather.

The tanned natural leather, shortly tanned leather may be achieved by several types of tanning. It may be chrome-tanned leather, vegetable-tanned leather, aldehyde-tanned leather, brain tanned leather, rose-tanned leather, synthetic-tanned leather, alum-tanned leather. Preferably, these types of tanned leather are crusted to achieve crusted natural leather.

The decorated natural leather by the present inkjet printing method may be used for manufacturing a wide range of leather articles to finished natural leather. Preferred leather articles include footwear, furniture, upholstery, bags and luggage, gloves, belts, wallets, clothing, automotive leather (e.g. train, plane, boat and car seats), interiors, books and stationary, packaging, equestrian articles and the like.

### Brief description of drawings

Figure 1 is an illustration how a hide (402) currently is painted. The operator (62) provides a hide (402) on a conveyor belt system (702). The hide (402) goes through a painting chamber (302), which comprises a paint roll (not visible) and a drying chamber, which comprises an infrared-dryer (not visible), for drying the wet painted hide. The painted hide is put on a stacker (502) for further processing of the painted hide (102).
Figure 2 is an illustration how a hide (402) is tensioned in a tannery (611) for drying, after tanning agents were applied. The hide (402) is provided on a frame (203), vertically oriented, and fastened by a plurality of leather clamps (103) which are clamping the edges of the hide (402). The tensioning is ensured by a hook that can be screwed in/out the leather clamp (103) to minimize the distance of the edge and the frame (203) (203).
Figure 3 illustrates parts of a hide (402): butt (104); shoulder (204); neck (304); leg (404) and belly (504).
Figure 4 illustrates the manufacturing process from animal skin to leather article such as shoes. The skin of an animal is removed at a slaughterhouse (601). The removed animal skin is manufactured in a tannery (611) by a phase 1: preparation (9101); to a phase 2: tanning (9201); to a phase 3: crusting (9301); to a phase 4: finishing (9401). The leather article manufacturer (621) makes in a phase 5: leather article manufacturing (9501) which is an end-product in natural leather for consumers; such as shoes.
Figure 5 illustrates a cross-section of a hide (402) with the common naming's in the leather industry: grain (104); junction of grain and corium (115); corium (125); flesh (135); split leather (145); fat (205); vein (215); artery (225); sweat glands (235); erector pili muscle (245), epidermis (255); sebaceous gland (265); hair shaft (275); hair root (285).

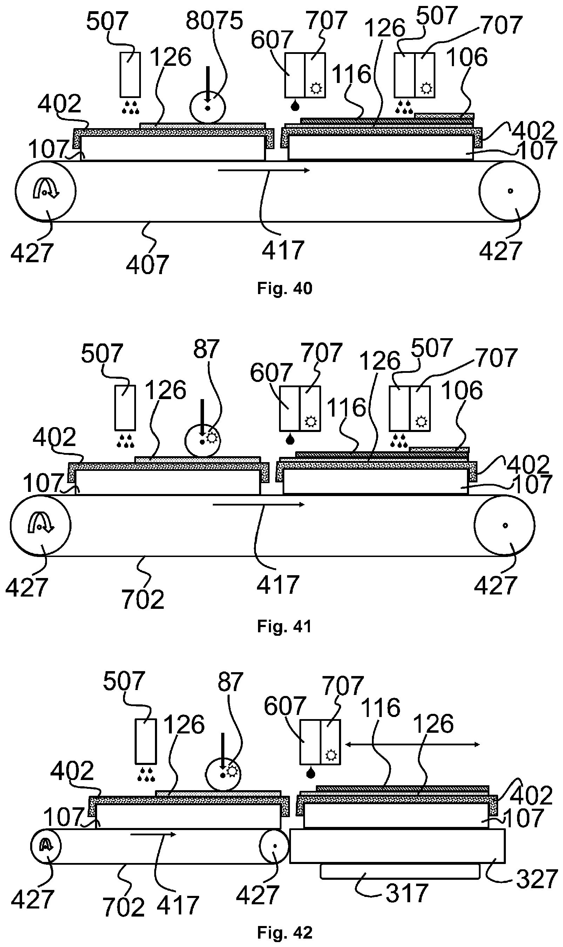

Figure 6 illustrates a cross-section of inkjet printed leather (146) comprising crusted leather (136); base coat (126); inkjet printed decorative image (116) and protective top coat (106). The inkjet printed leather (146) is manufactured by a digital leather printer, such as illustrated in figures 40, 41, 43, 44 and/or performed by one of the disclosed preferred embodiments.

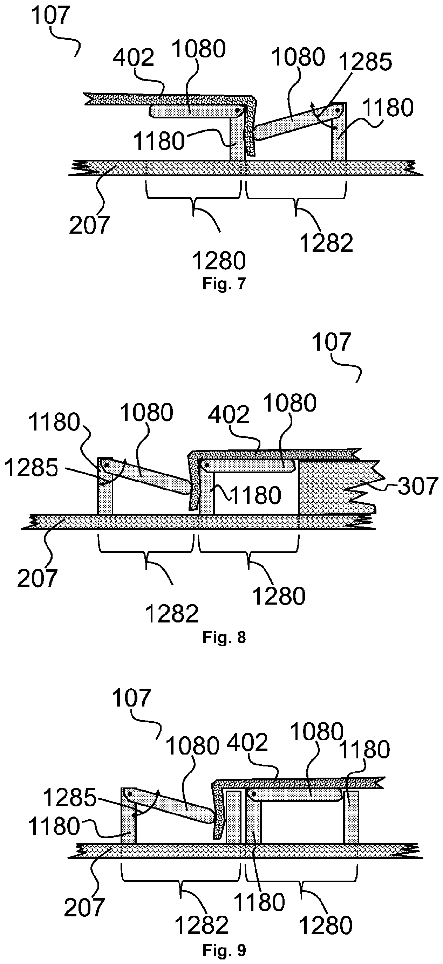

Figure 7 illustrates a cross-section of a part from a preferred rigid support (107), as disclosed for preferred embodiments based on clamping method 3. The clamping unit (1280) fixed on a base plate (207) may supporting a hide (402) on horizontal pivotal beam (1080) or the clamping unit (1282) fixed on the base plate (207) may clamping the hide (402) between a pivotal beam (1080) and the stationary beam (1180). By pivoting (1285) a pivotal beam (1080) connected to the stationary beam (1180) the hide (402) can be supported or clamped.
Figure 8 illustrates a cross-section of a part from a preferred rigid support (107) similar as figure 7. The hide (402) is also supported by a support table (307).
Figure 9 illustrates a cross-section of a part from a preferred rigid support (107), as disclosed for preferred embodiments based on clamping method 3. The clamping unit (1280) fixed on a base plate (207) may supporting a hide (402) on a horizontal pivotal beam (1080) or the clamping unit (1282) fixed on the base plate (207) may clamping the hide (402) between a pivotal beam (1080) and the stationary beam (1180). By pivoting (1285) a pivotal beam (1080) connected to another stationary beam (1180) the hide (402) can be supported or clamped.

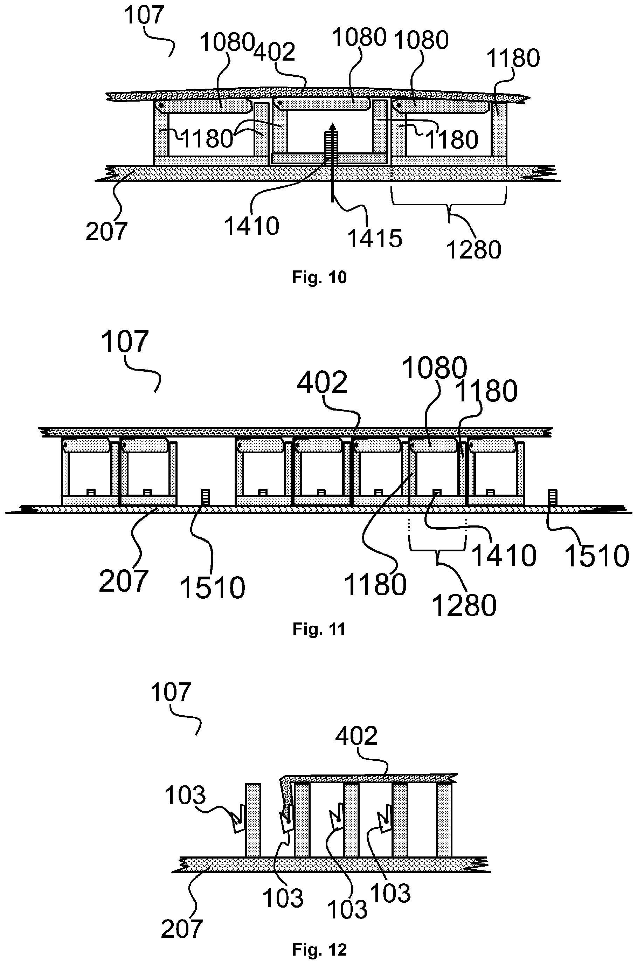

Figure 10 illustrates a cross-section of a part from a preferred rigid support (107), as disclosed for preferred embodiments based on clamping method 3. The clamping unit as support (1280) can be moved upwards on a used pin (1410). The used pin (1410) is fixed on the base plate (207) for example inserted in a bore (not visible), provided in the base plate (207). The clamping units (1280) with pivotal beam (1080) and stationary beams (1180) are illustrated as a pot. By moving, a clamping unit as support (1280) upwards, the tension on the hide (402) can locally be manipulated.
Figure 11 illustrates a cross-section, similar as figure 10 wherein some pins (1510) are unused and some pins (1410) are used for pots as clamping units. Depending on the shape of the hide (402), the clamping units can be (re)placed to follow the edges of the hide (402).
Figure 12 illustrates a cross-section of a part from a preferred rigid support (107), as disclosed for preferred embodiments based on clamping method 2, comprising a plurality of rods (1010) whereon each a leather clamp (103) is attached. The edge of the hide is clamped by such leather clamp (103) opposite to the side of the flat decoration area. The rods (1010) are fixed to a base plate (207).

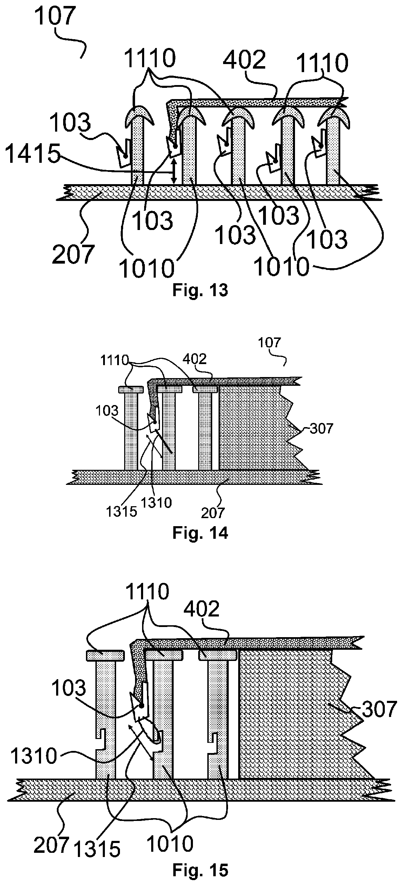

Figure 13 illustrates a cross-section, similar as figure 12, wherein each rod (1010) comprises a head (1110); which is mushroom-shaped to avoid scratches on the hide (402). The leather clamps (103) may be moved upwards (1415), along the rod (1010), for example via a rail (not visible) to tensioning and/or stretching the supported hide (402) via the leather clamp (103).

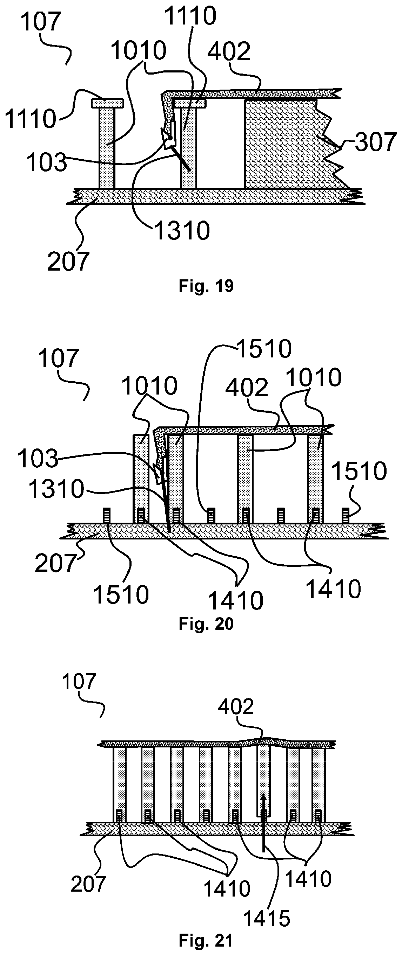

Figure 14 and figure 19 illustrate a cross-section, similar as figure 13 but a part of the preferred rigid support (107) comprises a support table (307) for supporting the centrum of the hide (402) and the plurality of rods(1010) for supporting the edges of the hide (402). The leather clamp (103) is attached to the rod (1010) by a strap, as stretching unit (1310), for stretching (1315) the hide (402).
Figure 15 illustrates a cross-section, similar as figure 14, wherein a rod (1010) comprises a hook for easy connecting a strap fastener, as stretching unit (1310), to a rod (1010). By fastening the strap, the hide shall be stretched (1315).
Figure 16 illustrates a cross-section, similar as figure 13 but a part of the preferred rigid support (107) comprises a support table (307) for supporting the centrum of the hide (402) and the plurality of rods (1010) for supporting the edges of the hide (402). The leather clamp (103) is attached to the rod (1010) by a strap, as tensioning unit (1210) for tensioning the hide (402).
Figure 17 illustrates a cross-section, similar as figure 16 wherein the support table (307) and a rod (1010) comprises a vacuum channel (807) for fixing the hide (402) by air sucking (817) to a head (1110) of the rod (1010) and the support table (307). The vacuum channels (807) are connected to a vacuum chamber (317).
Figure 18 illustrates a cross-section, similar as figure 13 but the head (1110) of each rod (1010) is block shaped with rounded edges to avoid scratches on the hide (402). The leather clamp (103) is attached to a rod (1010) by a stretching unit (1310).
Figure 20 and figure 21 illustrate a cross-section of a part from a preferred rigid support (107), as disclosed for preferred embodiments based on clamping method 2, comprising a plurality of rods (1010). The rods (1010) are (de)attachable to pins (1510, 1410) which are connected to the base plate (207), for example inserted in a bore (not visible) provided in the base plate (207). Depending on the shape of the hide (402), the rods (1010) can be (re)placed to follow the edges of the hide (402). In figure 21 by moving a rod (1010) upwards (1415) the tension on the hide (402) can locally be manipulated. In Figure 20 is the leather clamp (103) attached to a stretching unit (1310) that is connected to the base plate (207).

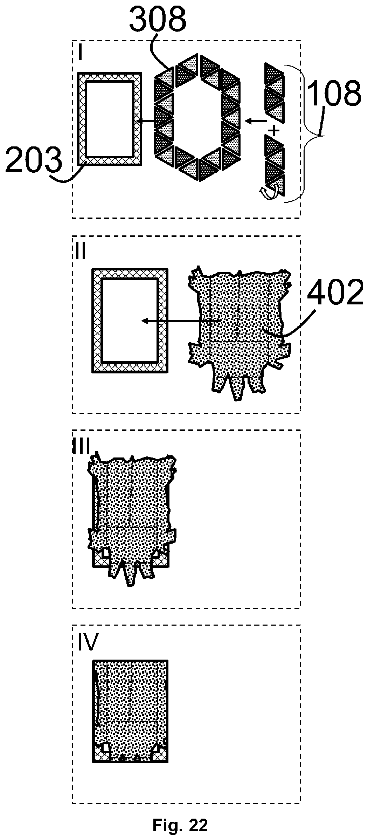

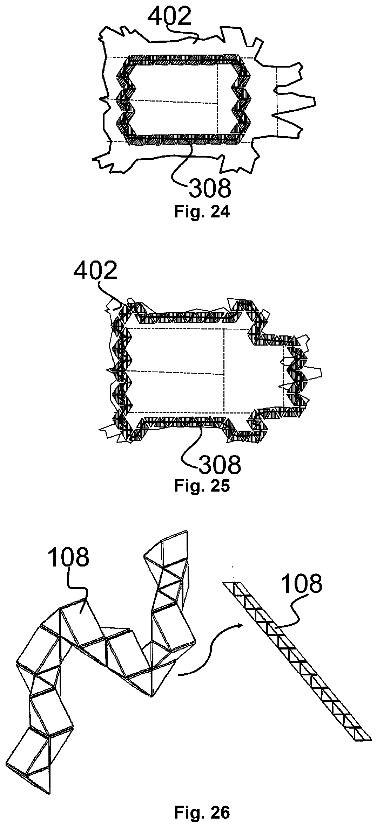

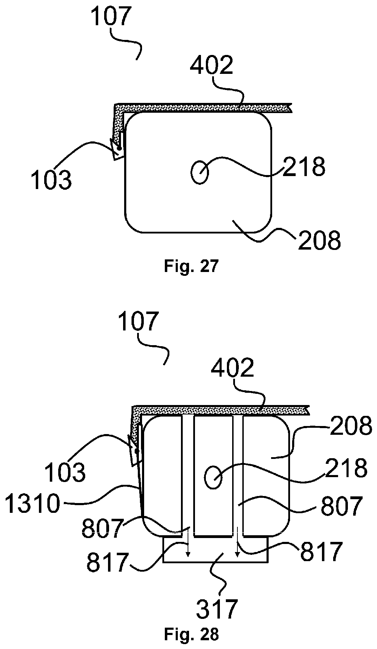

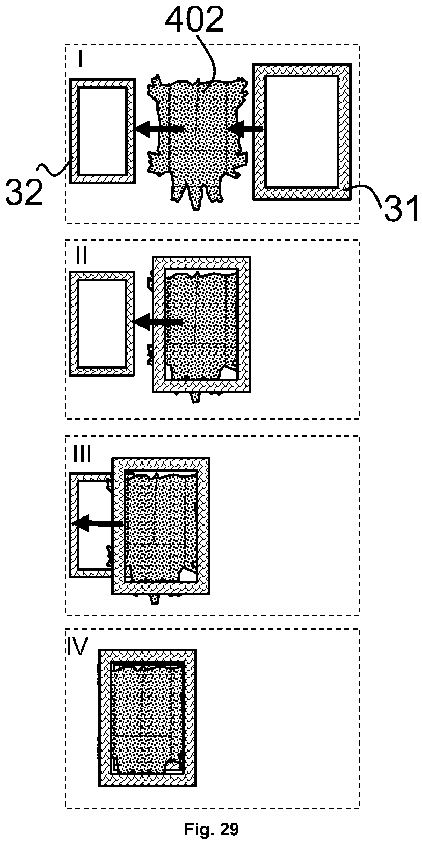

Figure 22 illustrates preferred four steps of the disclosed clamping method 4. A ring of prisms (308) is formed in a first step (I) by attaching a plurality of prisms to a chain of rotatable prisms (108) to get a frame (203, visualized as a rectangle for simplification) whereon the hide (402) can be provided. For example, Figure 24 and figure 25 illustrates each shaped ring of prisms (308) to get a frame whereon the hide (402) can be provided. The hide (402) is provided on a flat surface of the ring of prisms (308) in the second step (II) and third step (III). To fasten the hide on the ring of prisms (308) edges of the hide (402) are clamped by a leather clamps (not visible) opposite to the side of the flat decoration area. The hide (402) is tensioned over the frame (203). Figure 27 and Figure 28 illustrates as cross-section how an edge of a hide (402) is clamped by a leather clamp (103) which is attached to a prism of the ring of prisms. In figure 28 is the leather clamp connected with a strap, as stretching unit (1310), for stretching the hide over the edge of the prism. Figure 28 illustrates also air channels (807) which are connected to a vacuum chamber (317) to fix the hide (402) by air-suction (817) to the prism. The prism in figure 28 and figure 29 has also an indentation in its slanted face (208) for connecting another prism to the prism, which has a projection provided to one of its slanted face.

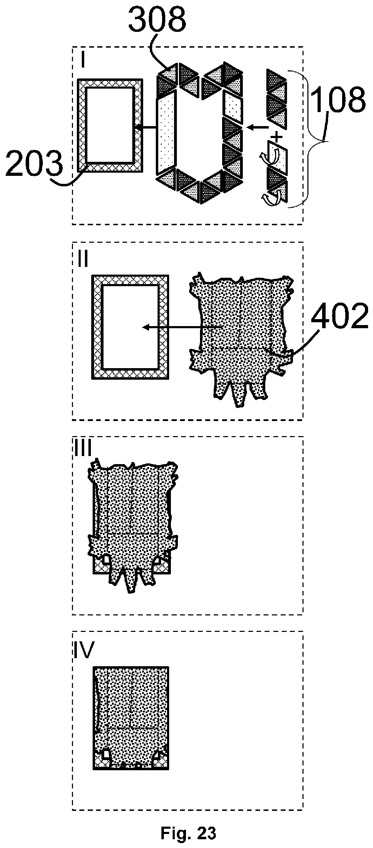

Figure 23 illustrates preferred four steps of the disclosed clamping method 4, similar as figure 22, but wherein the prisms are rotatable isosceles prisms and parallelepipeds.
Figure 26 illustrates how a shape in a chain of rotatable prisms (108) can be converted to another shape by rotating one or more prisms in the chain. Figure 24 and Figure 25 shows other shapes that follows edges of a hide (402). These shapes forms a ring of prisms (308).
Figure 29 illustrates a preferred four steps (I,II, III, IV) of the disclosed clamping method 1 wherein edges of a hide are clamped between an inner frame (32) and an outer frame (31) wherein the inner frame (32) and outer frame (31) matches.

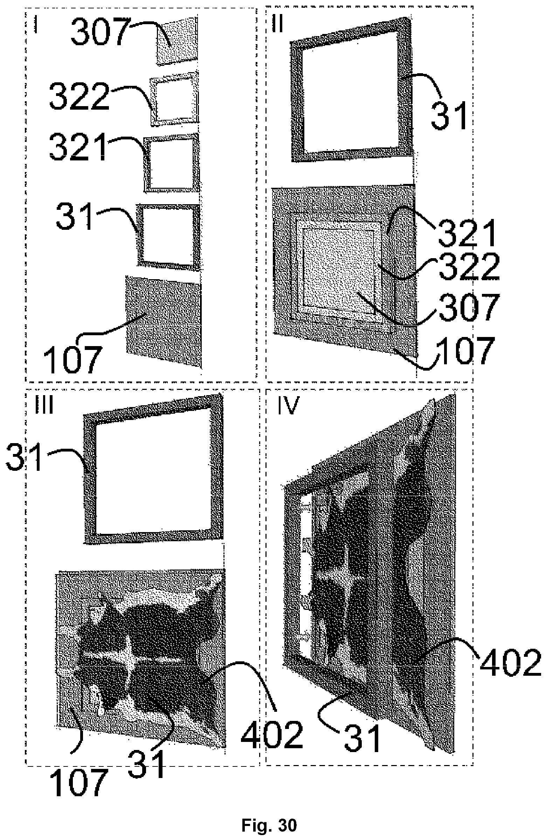

Figure 30 illustrates a preferred four steps (I,II, III, IV) of the disclosed clamping method 1 wherein edges of a hide are clamped in a rigid support (107) between a table formed by a support table (307) and 2 matching frames (321, 322), and an outer frame (31). The hide (402) is positioned on the table and the outer frame (31) is put around the matching table to clamp the hide (402). By forming the table with the support table and only one matching frame (322), a smaller flat decoration area is achieved or smaller hides can be clamped between matching frame (321), which becomes thus an outer frame, and the new formed table.

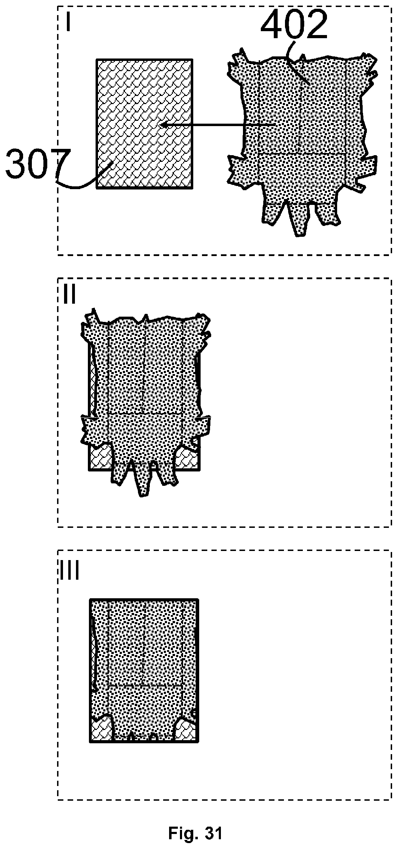

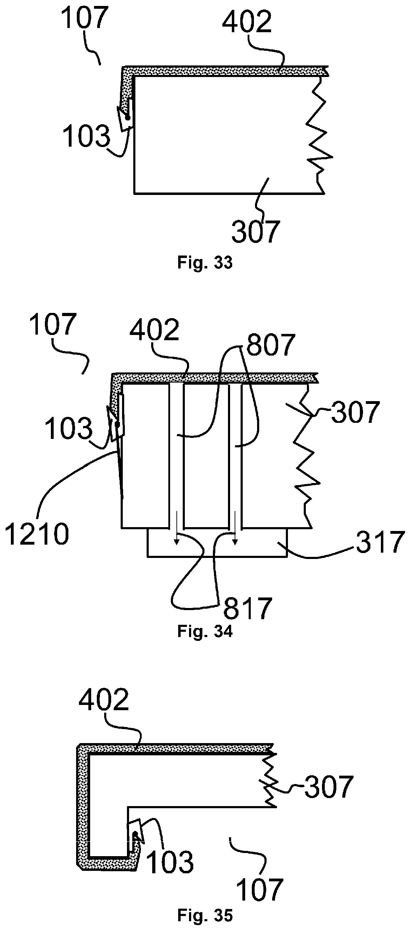

Figure 31 illustrates a preferred three steps (I,II, III) wherein a hide (402) is positioned on a support table (307) and wrapped around the edges of the support table (307) where the edges are clamped by leather clamps (not visible) opposite to the side of the flat decoration area. Figure 33, figure 34 and figure 35 are examples how an edge of the hide (402) are fastened by a leather clamp attached to a face of the support table (307).

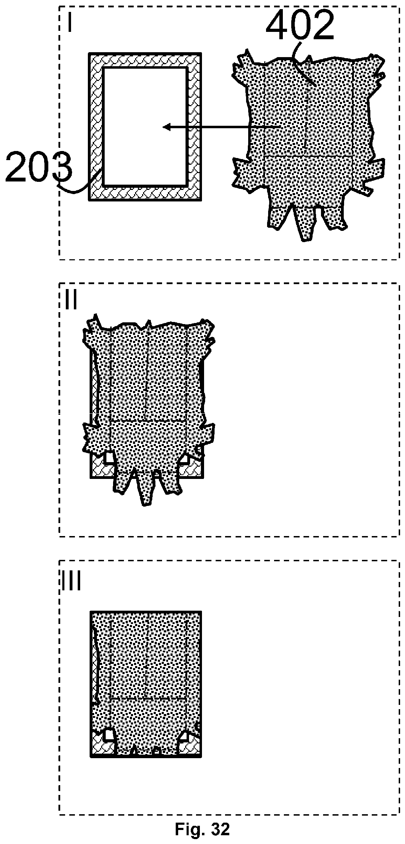

Figure 32 also illustrates a preferred three steps (1,11, III) wherein a hide (402) is positioned on a support table (307) and wrapped around the edges of the frame (203), as support table, where the edges are clamped by leather clamps (not visible) opposite to the side of the flat decoration area. Figure 33, figure 34 and figure 35 are examples how an edge of the hide (402) are fastened by a leather clamp attached to a face of the support table (307).
Figure 34 illustrates a part of the support table (307) as is illustrated in figure 31 and 32 wherein the hide (402) is fastened by a leather clamp (307) and is tensioned by a strap, connected from leather clamp (307) to a face of the support table (307). The support table (307) comprises air channels (807) and a vacuum chamber (317) to fix the leather by air-sucking (817) against the support table.
Figure 33 and 35 illustrates other ways of fastening a hide by a leather clamp, which is connected to the support table (307).

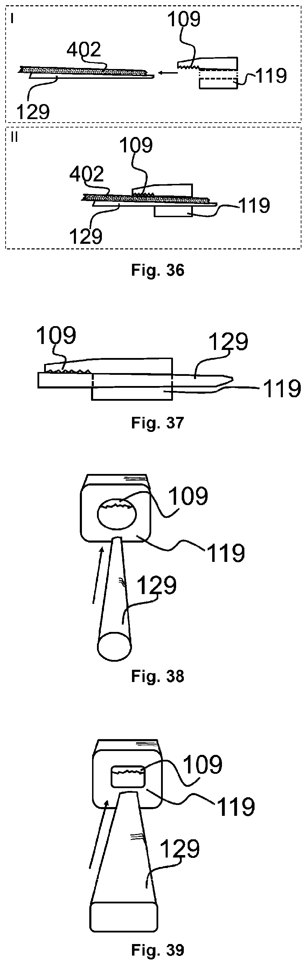

Figure 36, Figure 37, Figure 38 and Figure 39 illustrate a preferred leather clamp. Figure 36 illustrates in two steps (I, II) how a hide (402) is clamped by inserting (illustrated as an arrow) a tapered body (129) in an inner narrow way of a pipe-shaped body (119) forming a nip in co-operation with a grip surface (109). While inserting the tapered body (129), a hide is supported on the support surface of the tapered body (129). Figure 37 is a cross-section of a preferred leather clamp. Figure 38 and figure 39 illustrate a front view of a preferred leather clamp wherein the tapered body (129) and inner narrow way of the pipe-shaped body (119) is inserted (illustrated as an arrow). The cross-section of the tapered body (129) is in figure 38 a circle and in figure 39 a rounded rectangle.
Figure 40 illustrates a cross-section of a digital leather printer comprising a vacuum belt (407) which is wrapped around two pulleys (427) conveying rigid supports (107) in a conveying direction (417) while air-sucked against the vacuum belt. The vacuum chamber or vacuum pumps are not visible. A hide (402) is positioned and fastened on each rigid support by one of the clamping methods, which are disclosed in this application. The leather is coated by a base-coat (126) with a coating unit (507). The base-coat is pressed, also called stamped, on the hide by a press unit (8075). A decorative image (116) is printed by an inkjet printhead unit (607) and dried by a dry unit (707). On top of the dried decorative image a protective top coat (106) is applied by a coating unit (507). The protective top coat (106) is dried by another dry unit (707).
Figure 41 illustrates a cross-section of a digital leather printer, similar as figure 40 wherein the base-coat is heat pressed on the hide by a heat-press unit (87) and the rigid supports (107) are conveyed by a conveyor belt (702).
Figure 42 illustrates a cross-section for a digital leather printer, similar as figure 41, but wherein the rigid support (107) is conveyed (417) by a conveyor belt (702) while coating and wherein the rigid support is positioned on a vacuum table (327) and fastened by air-suction while jetting and drying a decorative image with a back-and-forth moving inkjet printhead unit (607) and dry unit (707). The vacuum table is connected to a vacuum chamber (317). The vacuum pump is not visible.

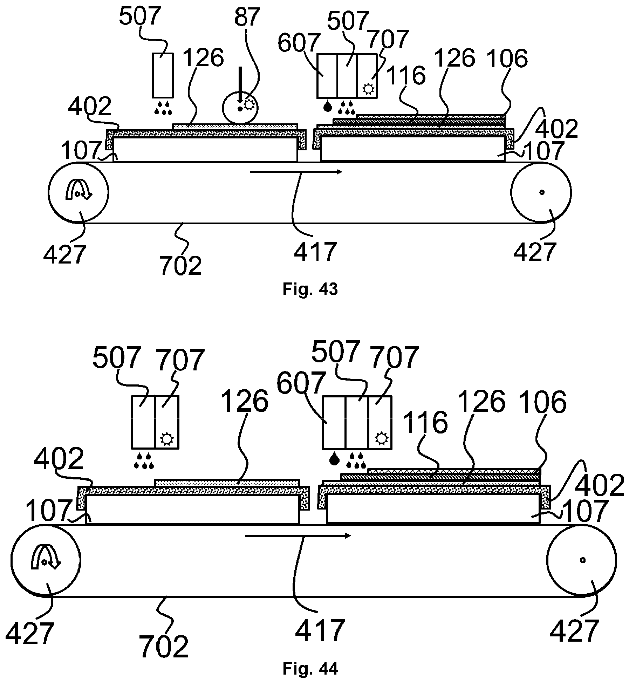

Figure 43 illustrates a cross-section of a digital leather printer, similar as figure 41 wherein the decorative image is jetted, protective top coated and dried with an inkjet printhead unit (607), coating unit (507) and dry unit (707). The decorative image is printed with a single-pass inkjet printing method
Figure 44 illustrates a cross-section of a digital leather printer, similar as figure 43 wherein the base-coat (402) is dried by dry-unit (707).

### Description of embodiments

### Base coating method

In a preferred embodiment the inkjet printing method on natural leather comprises an additional step before jetting a decorative image and preferably after fastening:
- applying with a coating unit (507) a base coat (126) on the flat decoration area of the fastened hide; and wherein the decorative image is printed on the base coat (126). This is additional step is also called a base coating method. The coated flat decoration area is called base coated flat decoration area. The base coat (126) may be a liquid, a gel or a powder. The coating unit (507) preferably faces the flat decoration area.

The base coat (126) preferably includes a polymer or copolymer based on polyurethane, more preferably a liquid that includes a polymer or copolymer based on polyurethane. It is found that such liquid improves the flexibility to the hide (402) so it flattens easier to the rigid support (107). The base coat (126) preferably further includes a polyamide polymer or copolymer, as polyamide. It has been found that it improves the compatibility with crusted leather (136) and the strength of the base coat (126). The base coat (126) is preferably unfading so a color in the printed decorative image shall not fading by outdoor use of the printed hide.

The fastening in the present invention is important because it is possible that the application of the liquid is causing that the hide (402) curls at its edges towards the inkjet printhead unit (607) or the hide (402) swells or crinkles towards an inkjet printhead in the inkjet printhead unit (607).

Similar as for the inkjet printhead unit (607), this preferred embodiment makes it possible that the distance between coating unit (507) and the flat decoration area can be taken small so a more uniform base coat (126) can be applied on the flat decoration area, especially when the coating unit (507) comprises a non-impact printing technology, such as one or more inkjet printhead unit (607), for applying the base coat (126). The chance of touching such coating unit (507) by the hide (402) shall become less or non-existence due to the clamping of the hide (402) opposite to the side of the flat decoration area. The one or more inkjet printheads may be comprised in the inkjet printhead unit (607) of the present invention.

The base coat (126) may also be dried or semi-dried by a dry unit (707) wherein, for the same reasons as above, it is advantageous that the distance between dry unit (707) and the coated hide can be taken small so a more uniform drying can performed and less energy is needed for the (semi)-drying or smaller dry time is needed for the (semi)-drying. The chance of touching the dry unit (707) by the coated hide shall become less or non-existence due to the clamping of the hide (402) opposite to the side of the flat decoration area.

Semi-drying is partially drying wherein the base coat (126) is still tacky or moderately dry after drying.

In a preferred embodiment, the applied liquid is dried or semi-dried on the decoration area by actinic radiation, more preferably by infra-red radiation (IR) and most preferably by ultraviolet radiation. In a preferred embodiment the actinic radiation is near-infrared (NIR) or short-wavelength infrared (SWIR). The curing device, such as a set of IR lamps, NIR lamps, SWIR, E-beam, UV bulb or UV LED lamps may travelling with the inkjet printhead unit (607) or coating unit (507) and/or be stationary attached as an elongated radiation source.

The base coat (126) may contain a pigment for providing a chromatic colour or an achromatic colour, preferably different from black. The chromatic colour or achromatic colour, preferably different from black, of the base coat (126) and the inkjet printed decorative image are used in combination to provide a decorative image to decorate the hide (402). The decorative image is preferably selected in advance from a decorative image storage.

A chromatic colour is any colour in which one particular wavelength or hue predominates. For example, blue and green are chromatic colours, while white, grey, and black are achromatic colours, as they have no dominant hue, meaning that all wavelengths are present in approximately equal amounts within those colours.

A white base coat is preferred because it not only masks colour inconsistencies and some surface defects in the surface of the hide (402), such as crusted natural leather or tanned natural leather, but it also increases the colour gamut. The colour gamut represents the number of different colours that can be produced with a certain inkjet ink set. An enlarged colour gamut enhances the luxury effect of leather as photographic image quality can be obtained, and also has economic benefits in that less complex inkjet printers can be used that are printing with an inkjet ink set containing fewer inkjet inks.

In a preferred embodiment, a tensioning or stretching method of the hide (402), while fastened, is applied while applying the base coating method. The tensioning or stretching method may not be used while jetting the decorative image and/or while applying a protective top coat (106).

The thickness of a dried base coat (126) on the hide (402) is preferably between 1 µm and 70 µm, more preferably between 10 µm and 50 µm. A too thick dried base coat influences the bending behaviour of the decorated hide badly thus not useful for finishing the decorated leather.

### Protective top coating method

In a preferred embodiment the inkjet the inkjet printing method on natural leather comprises an additional step after printing:
- applying with a coating unit (507) a protective top coat (106) on the flat decoration area of the fastened hide. This is additional step is also called a protective top coating method. The coating unit (507) may be the same as for applying a base coat (126) but it may also be another coating unit (507). The method of coating may also be different from the method of coating for applying the base coat (126). This is additional step is also called a protective top coating method. The protective top coat (106) may be a liquid, gel or a powder. The coating unit (507) for the application of the protective top coat (106) preferably faces the flat decoration area.

The protective top coat (106) may have the same or a similar composition as the base coat (126). Usually the protective top coat (106) is somewhat optimized according to the leather application. For example, flexibility does not play an important role for a leather book cover contrary to leather shoes. Hence, the protective top coat (106) for a book cover may be optimized towards scratch resistance.

The protective top coat (106) preferably includes a polymer or copolymer based on polyurethane. It is found that a protective top coat (106) as liquid improves the flexibility to the hide (402) so it flattens easier to the rigid support (107). The protective top coat (106) preferably further includes a polyamide polymer or copolymer, as polyamide. It has been found that it improves the compatibility with crusted leather (136) and the strength of the protective top coat (106). The fastening in the present invention is important because it is possible that the application of the liquid is causing that the hide (402) curls at its edges towards the inkjet printhead unit (607) or the hide (402) swells or crinkles towards an inkjet printhead of the inkjet printhead unit (607).

Similar as for the inkjet printhead unit (607), this preferred embodiment makes it possible that the distance between coating unit (507) and the flat decoration area can be taken small so a more uniform protective top coat (106) can be applied on the flat decoration area, especially when the coating unit (507) comprises a non-impact printing technology, such as one or more inkjet printhead unit (607), for applying the protective top coat (106). The chance of touching such coating unit (507) by the hide (402) shall become less or non-existence due to the clamping of the hide (402) opposite to the side of the flat decoration area.

For enhancing the scratch resistance, a protective top coat (106) may be applied onto the printed decorative image and the protective top coat (106). The top coat preferably includes a cross-linker and a polymer or copolymer based on polyurethane and/or polyamide.

The protective top coat (106) preferably includes a polymer or copolymer based on polyurethane as this is beneficial for the flexibility of the printed leather. A polyamide polymer, which is found to have a high compatibility with a polyurethane binder, is preferably included if the scratch resistance needs to be improved.

Suitable polyurethanes include Urepal^{™} PU147 and PU181 from CHEMIPAL S.p.A.; Melio^{™} Promul 61 from STAHL; Astacin^{™} Finish PS from BASF; Ecrothan^{™} 4075, 4078 and 4084 from MICHELMAN; Incorez^{™} CS8073 and CS065-195 from INCOREZ.

Suitable polyamides include the PA emulsion types ED310 and 161148 CX from MICHELMAN.

Although polyurethanes and/or polyamides are preferred as the polymers for the base" coat, other polymers may be used preferably in combination with the polyurethanes and/or polyamides. Such polymers preferably have an elongation at break of more than 200%, more preferably 300%. The elongation at break is measured according to ISO527-2, for example, with a MTS Exceed^{™} testing apparatus from MTS Sustems Corporation.

A suitable polymeric acrylate emulsion is Bioflex^{™} KGA from LMF Biokimica.

A cross-linker may be incorporated in the protective top coat (106) to improve the scratch resistance. Preferred cross-linkers include those mentioned above for the base coat (126).

If a matt top surface is desired for the inkjet printed leather (146), a matting agent may be included. Any suitable matting may be used. Preferred matting agent include silica. A preferred commercially available example of a silica dispersion is Euderm^{™} SN2 from LANXESS.

The protective top coat (106) may be applied by spraying or by any coating technique known, such as knife coating, extrusion coating, slide hopper coating and curtain coating.

The protective top coat (106) may also be dried by a dry unit (707) wherein, for the same reasons as above, it is advantageous that the distance between dry unit (707) and the protective top-coated hide can be taken small so a more uniform drying can performed and less energy is needed for the drying. The chance of touching the dry unit (707) by the coated hide shall become less or non-existence due to the clamping of the hide (402) opposite to the side of the flat decoration area. In a preferred embodiment the applied liquid is cured on the decoration area by actinic radiation, more preferably by infra-red radiation (IR) and most preferably by ultraviolet radiation. In a preferred embodiment the actinic radiation is near-infrared (NIR) or short-wavelength infrared (SWIR). The curing device, such as a set of IR lamps, NIR lamps, SWIR, E-beam, UV bulb or UV LED lamps may travelling with the inkjet printhead unit (607) or coating unit (507) and/or be stationary attached as an elongated radiation source.

In a preferred embodiment, a tensioning or stretching method is applied while applying the protective top coating method, while the hide (402) is fastened, even there is no tensioning or stretching method applied while printing and/or performing a base coating method.

The thickness of a dried protective top coat (106) on the hide (402) is preferably between 1 µm and 200 µm, more preferably between 5 µm and 100 µm. A too thick dried protective top coat (106) influences the bending behaviour of the decorated hide (402) badly, thus not really useful for finishing the decorated leather.

### Tensioning method

To improve the flatness of the to-be-printed hide or to-be-coated hide or to-be-top-coated hide, the inkjet printing method on natural leather in the present invention may comprise an additional step of tensioning the hide (402), preferably towards the edge, while the edge is clamped opposite to the side of the flat decoration area. The tensioning method is preferably during the applying of the base-coat and/or printing the decorative image. The clamping is thus outside the flat decoration area. Especially when there are a plurality of clamps or clamping units, which are clamping the total edge of the hide, the hide (402) may be tensioned from the centre of the hide (402) to the total edge of the hide. The tensioning guarantees a better flatness of the hide (402) and a better uniform spreading on the hide (402) by the base coat (126), protective top coat (106) and/or by the ink for the decorative image or pattern.

The tensioning of the hide (402) towards the edge may be performed by a tensioning unit (1210), which is preferably attached to the clamping unit.

The rigid support (107) may comprise one or more supporting element, which is movable towards the inkjet printhead unit (607), more specific to its nozzles, to enhance the tensioning of the hide (402) locally when the hide (402) is clamped. It is known that certain areas in a hide (402) can have other internal tensions. This may influence the uniformity of the base coat (126); protective top coat (106) and/or the printed decorative image on the hide (402). The supporting element, such as a rod (1010), comprises a head (1110) whereon a part of the hide (402) is supported. By moving the supporting element, which supports a part of the hide (402), towards the inkjet printhead unit (607) while the hide (402) is clamped, the tensioning around the part of the hide (402) is tensioned which influences the internal tension in that part of the hide (402). With more than one movable supporting elements, it is possible to tension the hide (402) at some selected areas. The moving direction of the supporting element may be angled to the plane wherein the nozzles of the inkjet printhead are positioned but preferably perpendicular to the plane wherein the nozzles of the inkjet printhead are positioned.

The head (1110), also called the support area, of such supporting elements is preferably flat but may also be smooth rounded head, such as mushroom shaped head to prevent that the edges of the head (1110) damages the supported side of the hide (402). Larger the support area of the head (1110), less supporting elements are needed.

The movable supporting elements may also be used to position the hide (402), especially stiff hide, parallel to the plane wherein the nozzles of the inkjet printhead unit (607) are positioned.

The tensioning may be measured by a tension watch or tension gauge.

### Stretching method

To improve the flatness of the to-be-printed hide or to-be-coated hide or to-be-top-coated hide (402), the inkjet printing method on natural leather in the present invention may comprise an additional step of stretching the hide (402), preferably towards the edge, while the edge is clamped opposite to the side of the flat decoration area. The stretching method is preferably performed during the applying of the base-coat and/or printing the decorative image. This stretching method gives a higher tension in the hide (402) wherein the surface of the hide is enlarged. The clamping is thus outside the flat decoration area. Especially when there are a plurality of clamps or clamping units, which are clamping the total edge of the hide, the hide (402) may be stretched from the centre of the hide (402) to the total edge of the hide. The stretching guarantees a better impregnation of the hide (402) and/or uniform spreading on the hide (402) by the liquid for the base coat (126), protective top coat (106) and/or by the ink for the decorative image or pattern, probably because the epidermis (255) of the hide (402) is stretched and/or hair shaft (275) are widened. When a hide (402) is stretched, the area of the hide (402) is enlarged.

The stretching of the hide (402) towards the edge may be performed by a stretching unit (1310), which is preferably attached to the clamping unit.

The rigid support (107) may comprise one or more supporting element, which is movable towards the inkjet printhead unit (607), more specific to its nozzles, to enhance the tensioning of the hide (402) locally when the hide (402) is clamped. It is known that certain areas in a hide (402) can have other internal tensions. This may influence the uniformity of the base coat (126); protective top coat (106) and/or the printed decorative image on the hide (402). The supporting element, such as a rod (1010), comprises a head (1110) whereon a part of the hide (402) is supported. By moving the supporting element, which supports a part of the hide (402), towards the inkjet printhead unit (607) while the hide (402) is clamped, the tensioning around the part of the hide (402) is stretched which influences the internal tension in that part of the hide (402). With more than one movable supporting elements, it is possible to stretch the hide (402) at some selected areas. The moving direction of the supporting element may be angled to the plane wherein the nozzles of the inkjet printhead are positioned but preferably perpendicular to the plane wherein the nozzles of the inkjet printhead are positioned.

The head (1110), also called the support are, of such supporting elements, is preferably flat but may also be smooth rounded head, such as mushroom shaped head to prevent that the edges of the head (1110) damages the supported side of the hide (402). Larger the support area of the head (1110), less supporting elements are needed.

The movable supporting elements may also be used to position the hide (402), especially stiff hide (402), parallel to the plane wherein the nozzles of the inkjet printhead unit (607) are positioned.

### Clamping method 1

The inkjet printing method preferably clamps the edge between an outer side of the rigid support (107) and an outer frame (31) that matches the outer side of the rigid support (107). The shape of the outer frame (31) and the matched outer side of the rigid support (107) may be triangular, rectangular, pentagonal, hexagonal, heptagonal or octagonal or have an averaged shape of hides, also called hide-shape or hide-silhouette. Preferred embodiments of this clamping method are illustrated in the figures from 29 to 30.

The hide (402) is positioned on the rigid support (107) and for fastening the edge of the hide, the outer frame (31) is positioned on top of the hide (402) and pressed towards the positioned hide (402), thus away from the nozzles of the inkjet printhead unit (607), so the outer frame (31) matches the outer side of the rigid support (107). The edge becomes clamped between the outer frame (31), more specific the inner side of the outer frame (31), and the outer side of the rigid support (107). This outer side of the rigid support (107) and/or this inner side of the outer frame (31) may be grooved for a better clamping of the hide (402) between the rigid support (107) and the outer frame (31).

The stretching or tensioning methods, as in previous preferred embodiments, may be performed by pressing the outer frame (31) more away from the nozzles of the inkjet printhead unit (607), alongside the outer side of the rigid support (107) or by moving the rigid support (107) towards the nozzles of the inkjet printhead unit (607) alongside the inner side of the outer frame (31). If the rigid support (107) is a support table (307) the movement of this rigid support (107) alongside the inner side of the outer frame (31) and towards the nozzle of the inkjet printhead unit (607), the hide (402) positioned on the rigid support (107) is tensioned or even stretched over the support area from the support table (307), preferably a vacuum table (327). The support area from a support table (307) is the side where on the hide (402) is supported on the rigid support (107).

The outer frame (31) may be expansible to accommodate the varying thicknesses of hides and remains substantially it shape to match the outer side of the rigid support (107). The outer frame (31) may comprise an expansion unit for changing its perimeter so the outer frame (31) is expandable and contractible.

The rigid support (107) may also be a frame (203), which may then be called an inner frame (32, 321, 322) which matches the outer frame (31) or it may be a combination of an inner frame (32, 321, 322) and a support table (307), preferably a vacuum table (327), wherein the inner frame (32, 321, 322) and outer frame (31) is for clamping the edge and the support table (307) for supporting the hide (402). The inner frame (32, 321, 322) may also comprise vacuum holes, which are connected via air-channels to a vacuum chamber (317). By a vacuum force through these vacuum holes the holding down, flattening and fastening of the supported hide (402) is enlarged.

The outer frame (31) and/or inner fame may be attached to the digital leather printer or to the rigid support (107) for fastening the outer frame (31) better to the digital leather printer. It may be attached for example by screws, bolts or any other suitable attaching means wherein preferably the outer frame (31) can also be de-attached from the digital leather printer when another hide (402) have to be mounted on the rigid support (107). Such attaching means are for example a quick release fastener. A quick release fastener may be a quarter turn fastener, tension latch, Livelock^{™} panel fastener; quick release pin. A known manufacturer of such fasteners is Protex Fasteners Ltd (www.protex.com). The outer frame (31) and/or inner fame may be attached to the digital leather printer or to the rigid support (107) for fastening the outer frame (31) better to the digital leather printer by vacuum power for example the frames are air-sucked against a vacuum table (327) which is comprised in the digital leather printer.

The rigid support (107) and outer frame (31) are preferably parallel positioned to each other when the hide (402) is clamped by the matching the outer frame (31) and rigid support (107). The perpendicular distance between the rigid support (107), there were the hide (402) is supported, and the inkjet printhead unit (607), more specifically the nozzle of the inkjet printhead unit (607), is preferably equal and more preferably smaller than the perpendicular distance between the outer frame (31) and the inkjet printhead unit (607), more specifically the nozzles of the inkjet printhead unit (607).

The space between the outer frame (31) and the rigid support (107) when both are matched without the hide (402) is between 100 µm and 10000 µm. The space depends on the thickness of the hides that are used in in the decorative natural leather manufacturing line. The distance may be enlarged and shortened with an expansion unit.

The outer frame (31) and/or rigid support (107) comprises preferably a thermoplastic polymer resin or is made of thermoplastic polymer. It is an advantage if the outer frame (31) has a high chemical resistance, high UV (ultra-violet) resistance, high thermal shock resistance, high mechanical resistance, easy machinable (for milling/grinding), low liquid absorbance, high electrical and/or high impact resistant properties which is achievable when the outer frame (31) comprises a thermoplastic polymer, such as engineering plastic compositions and in a preferred embodiment polyethylene terephthalate (PET), polyamide (PA), high-density polyethylene (HDPE), polytetrafluoroethylene (PTFE), polyoxymethylene (POM) and/or Polyaryletherketone (PAEK), whereof polyethylene terephthalate (PET) is most preferred, due its wear resistance, wet or dry, chemical resistance, and medium cost range. PET also remains stiffer at higher temperatures than outer frames (31) comprising other thermoplastic polymer resins. The high resistance properties for an outer frame (31) are an advantage because the outer frame (31) is support to ink spilling, weight of ink receivers (300, 305), temperature changing's, and/or UV light. The outer frame (31) may also comprise aliphatic polyamides, polyamide 11 (PA 11), polyamide 12 (PA 12), UHM-HDPE, HM-HDPE, Polypropylene (PP), Polyvinyl chloride (PVC), Polysulfone (PS), Poly(p-phenylene oxide) (PPO^{™}), Polybutylene terephthalate (PBT), Polycarbonate (PC), Polyphenylene sulphide (402) (PPS).

An outer frame (31) made out of engineering plastic compositions, is easily and ergonomically removable from the digital leather printer due to its low weight.

The outer frame (31) and/or rigid support (107) may be made of aluminium to lower the weight of the outer frame (31) and/or rigid support (107) so it is easily and ergonomically removable from the digital leather printer.

Depending on the size of the hide (402), a different sized outer frame (31) and matching rigid support (107) may be needed to optimize the size of the decoration area (see FIG. 30).

The frames from this first clamping method are preferably rounded at their edges to avoid scratches on the hide or softened by a rubber board.

### Clamping method 2

The rigid support (107) in a preferred inkjet printing method and digital leather printer may comprise a plurality of rods (1010) as supporting points for the positioned hide (402) and wherein the edge of the hide is fastened to a rod (1010) from the plurality of rods (1010) by a clamping unit. Preferred embodiments of this clamping method are illustrated in the figures from 12 to 21. The support area of this rigid support (107) is formed by the plurality of supporting points whereon the hide (402) is carried. The rods (1010) are elongated and oriented towards the inkjet printhead unit (607) and preferably oriented perpendicular to the support area. A rod (1010) is a straight bar. An advantage is that also the clamping unit is to the opposite side of the flat decoration area so it shall not be soiled by jetted inkjet ink such as UV curable pigmented inkjet ink. The mechanical parts in such clamping unit may become stuck due to dried inkjet ink or due to corrosion of liquids.

In a preferred embodiment is a leather clamp (103) movably attached to a rod and along the rod, for example by a rail. By moving the leather clamp (103) along the rod, tensioning or stretching of the fastened hide can be achieved at the clamped edge.

The weight of the hide (402) is distributed among the plurality of rods (1010), which are oriented upwards to the positioned hide (402). The base of the rod (1010) is attached to a base plate (207) and the head (1110) of the rod (1010) is the supporting point. The plurality of rods (1010) are arranged and attached to the base plate (207) in a lattice pattern or pseudo-randomly pattern. A lattice pattern may be rhombic lattice, rectangular lattice, square lattice, hexagonal lattice, parallelogram lattice, equilateral triangular lattice or a honeycomb lattice. A pseudo-randomly arranged pattern may be blue noise pseudo-randomly arranged pattern. The area wherein the rods (1010) are attached to the base plate (207) may be any shape such as rectangular, triangular, rectangular, pentagonal, hexagonal, heptagonal, octagonal or have an averaged shape of hides, also called hide-shape or hide-silhouette.

The base plate (207) of the rigid support (107) may comprise a plurality of vertical bores wherein one of each rod (1010) of the plurality of rods (1010) is attached or inserted. A rod (1010) may releasable held in the bores. For example, washers frictionally engage a rod (1010) in such a vertical bore. In a preferred embodiment, the rods (1010) may be changed in position by detaching them from the base plate (207) and re-attaching them on another place of the base plate (207) (FIG. 20). This is an advantage when several originated hide-types may need to be printed such as hide (402) of a snake, which has an elongated size and hide (402) of cow, which is broad. This changing feature is an advantage for versatility of the digital leather printer.

The length of a rod (1010) is preferably from 3 mm to 100 mm, more preferably from 10 mm to 50 mm. The density of the rods connected to the base plate (207) is preferably from 4 rods per 10000 cm² to 4 rods per 1 cm².

A rod (1010) may comprise in this preferred embodiment a tapered point as supporting point to carry the hide (402) or the rod (1010) may comprises a head (1110) (FIG. 13, FIG.14, FIG. 15, FIG. 16, FIG. 17, FIG. 18 and FIG. 19) , as supporting point, whereon the hide (402) is supported. The head (1110) is preferably parallel to the support area. The heads (1110) are preferably not in touch, thus contact-less, with the other heads (1110) of the other supporting points from the plurality of supporting points. The head (1110) is preferably small and/or flat but it may also be a smooth rounded head (1110), such as mushroom shaped head (1110) (FIG. 13) to prevent that the edges of the head (1110) damages the supported side of the hide (402). Larger the support area of the head (1110), less rods (1010), as supporting elements, are needed.

The free space between the rods (1010) and preferably the space between the heads (1110) is used for facilitating the fastening of the edge to the rigid support (107) or a rod (1010) by the clamping unit.

The clamping unit, after clamping the edge, is preferably attached to the rod (1010) opposite to the side of the flat decoration area, between the head (1110) and the base of the rod (1010) by a coupling device so the clamping unit is positioned opposite to the side of the flat decoration area. Thus, the clamping unit cannot touch the inkjet printhead unit (607). The clamping unit may also be attached to the base plate (207) of the rigid support (107) (FIG. 20).

A head (1110) of a rod (1010) may comprise an aperture, also called a vacuum hole to hold down the supported part of the hide (402). The vacuum hole is connected to a vacuum pump via an air channel, which is inside the rod (1010). (FIG. 17)

The clamping unit grasps only a few centimetres of the margin of the hide (402) and the clamping unit comprises a coupling device for coupling the clamping unit and the rod (1010). The clamping unit is preferably not harmful for the hide (402) and may be used for hides with variable thickness.

The clamping unit comprises in a preferred embodiment a tensioning and/or stretching unit (1310) wherein the clamped edge of the hide is brought narrower to the rod (1010) whereon the clamping unit is attached by the coupling device, also called a coupler or a join or brought narrower to the base plate (207) whereon the clamping unit is attached by the coupling device. The advantages of tensioning and stretching is disclosed above (FIG. 14, FIG. 15, FIG. 16, FIG. 17, FIG. 18, FIG. 19 and FIG. 20).

The coupling device may be a hole opening in the clamping unit, wherein a band, such as a drawstring or a strap, connects the hole opening and the base plate (207) or the rod (1010), for example by a hook on the rod (1010), for fastening the edge of the hide. The band, such as a drawstring or a strap, may be pulled or strapped so the distance between the clamping unit, thus the clamped edge of the hide, and the base plate (207) or rod (1010) becomes narrower to tension and/or stretch the hide (402), positioned on the rigid support (107), towards the edge. The advantages of stretching is disclosed above. The hook on the rod (1010) may also be a hole opening or even a small clamp attached to the rod (1010) but if it is a hook then the hook is preferably oriented away of the flat decoration area for facilitating the connection by a band, such as a drawstring or a strap (FIG. 15).

The coupling device should preferably be constructed so it is reusable after decoupling the clamping unit from the rod (1010).

In a preferred embodiment the clamping unit comprises a pipe-shaped body (119) with an inner narrow way with a cross section which tapers in the direction of one end of the body and a grip surface (109) projecting from the opposite end of the body, and a tapered body (129) with a tapering section which is insertable into the inner narrow way, via its wide opening, thereby forming a nip in co-operation with the grip surface (109) (109). Preferred embodiments of this leather clamp (103) are illustrated in the figures from 36 to 39. The hide (402) is entered into the nip between the pipe-shaped body (119) and the tapered body (129). Preferably, the inner narrow way has a rectangular cross section. The grip surface (109) may form an extension of one of the sides of the inner narrow way, preferably the rectangular inner narrow way. The grip surface (109) is preferably grooved. Both the pipe-shaped body (119) and the tapered body (129) may be manufactured from a plastic material. The pointed end of the tapered body (129) may be provided with a coupling device to attach the clamping unit to the base plate (207) or the rod (1010) between its head (1110) and base.

This preferred clamping unit is another embodiment in the present invention, namely an embodiment for a leather-clamping unit, which can be used in the several steps of the manufacturing of natural leather articles, in the step of tanning or in the step of crusting natural leather for example in tensioning, stretching of hides or drying of hides. The presented leather-clamping unit guarantees to be harmless for the hide (402) and may be used and re-used for several thicknesses in the hide (402) and between hides. A hide (402) is with such leather-clamping unit safely clamped at an edge of the hide while drying and/or tensioning and/or stretching and/or decorating the hide (402) by gripping two opposite sides of the hide (402). In a preferred embodiment, an edge of the hide is gripped in said nip, more preferably gripped between the grip surface (109) and the tapered body (129). The tapered body (129) and/or grip surface (109) may be grooved for a better clamping of the hide (402). The tapered body (129) may have a concave grip surface (109).

The tapered body (129) may be provided with a hole opening for attaching a coupling device, such as a string, so that the tapered body (129) is subjected to a substantially continuous pulling force when an edge of a hide is entered into the nip. The pulling force is directed away of the edge in the direction of the string.

The rod (1010), leather clamp (103) and/or base plate (207) comprises preferably a thermoplastic polymer resin or is made of thermoplastic polymer. It is an advantage if the rod (1010) and/or base plate (207) has a high chemical resistance, high UV (ultra-violet) resistance, high thermal shock resistance, high mechanical resistance, easy machinable (for milling/grinding), low liquid absorbance, high electrical and/or high impact resistant properties which is achievable when the rod (1010) comprises a thermoplastic polymer, such as engineering plastic compositions and in a preferred embodiment polyethylene terephthalate (PET), polyamide (PA), high-density polyethylene (HDPE), polytetrafluoroethylene (PTFE), polyoxymethylene (POM) and/or Polyaryletherketone (PAEK), whereof polyethylene terephthalate (PET) is most preferred, due its wear resistance, wet or dry, chemical resistance, and medium cost range. PET also remains stiffer at higher temperatures than rods (1010) comprising other thermoplastic polymer resins. The high resistance properties are an advantage because the support layer maybe support to ink spilling, weight of ink receivers, temperature changing's, and/or UV light. The rod (1010) may also comprise aliphatic polyamides, polyamide 11 (PA 11), polyamide 12 (PA 12), UHM-HDPE, HM-HDPE, Polypropylene (PP), Polyvinyl chloride (PVC), Polysulfone (PS), Poly(p-phenylene oxide) (PPOTM), Polybutylene terephthalate (PBT), Polycarbonate (PC), Polyphenylene sulphide (402) (PPS).

The rod (1010), leather clamp (103) and/or base plate (207) may be made of aluminium or an alloy of it to lower the weight of the rod (1010) and/or base plate (207) so it is easily and ergonomically removable from the digital leather printer. Aluminium is remarkable for the metal's low density and its ability to resist corrosion, which is a benefit for the strength of the rigid support (107) and especially for the strength of the rod (1010).

One or more rods (1010) of the plurality of rods (1010) may be a movable supporting element, for example by screwing the rod (1010) towards the inkjet printhead unit (607), more specific to its nozzles, to enhance the tensioning of the hide (402) locally and tension/stretch the hide (402) locally when the hide (402) is clamped (FIG. 21). By moving a rod (1010), whereon a part of the hide (402) is supported on its head (1110), towards the inkjet printhead unit (607) while the hide (402) is clamped, the tensioning around the part of the hide (402) is tensioned and/or stretched which influences the internal tension in that part. With the movable supporting elements, it is possible to tension and/or stretch the hide (402) at some selected areas. The advantageous of tensioning and stretching of a hide (402) is disclosed above.

The movable supporting elements may also be used to position the hide (402), especially stiff hide (402), parallel to the plane wherein the nozzles of the inkjet printhead unit (607) are positioned.

### Clamping method 3

The rigid support (107) may comprise a plurality of clamping units (1280, 1282) whereon each clamping unit a pivotal beam (1080) and stationary beam (1180) (1180) are connected. The rigid support (107) comprises a base plate (207) whereon the stationary beams (1180) of the plurality of clamping units, preferably vertically, are attached. Preferred embodiments of this clamping method are illustrated in the figures from 7 to 11. The clamping unit is positioned opposite to the side of the flat decoration area. The pivotal beam (1080) is pivoted (1285) horizontal or parallel to the inkjet print head unit, more specific to the nozzles from the inkjet print head unit, for supporting the hide (402). The clamping unit has now a support function (1280).

The pivotal beam (1080) is pivoted (1285) opposite to the side of flat decoration area, thus outside the flat decoration area, for clamping the edge of the hide wherein the edge is clamped between the pivotal beam (1080) and stationary beam (1180) or another stationary beam (1180); which is also attached to the base plate (207). The clamping unit has now a clamp function (1282).

The clamping unit (1282, 1280) is switchable from support to clamp and clamp to support. A fast fastening of a hide (402) is with such clamping units easily achieved and the operator can easily switch between different shaped hides.

In a preferred embodiment, the clamping unit with the pivotal beam (1080), is a pot or container comprising a pivotal lid as pivotal beam (1080) and wherein the stationary beam (1180) is a wall of the pot (FIG. 10 and FIG. 11). The bottom of the pot may be formed by the base plate (207). CLOSED POT: The pivotal lid is pivoted parallel to the inkjet print head unit, more specific to the nozzles from the inkjet print head unit, for supporting the hide (402).

OPEN POT: The pivotal lid is pivoted opposite to the side of flat decoration area, thus outside the flat decoration area, for clamping the edge of the hide to the rigid area wherein the edge is clamped between the pivotal lid and the wall of the pot.

In a preferred embodiment is the pivoting of the pivotal beam (1080) done by a motor to automate the hide fastening. After positioning the hide, a camera can recognize the shape. Depending on the recognized shape, the pot can closed for supporting or opened for clamping.

The clamping unit with pivotal beam (1080) wherein the pivotal beam (1080) is parallel to the inkjet printhead unit (607), more specific to the nozzles of the inkjet printhead unit (607), is then a supporting element (1280). As seen in previous preferred embodiments the supporting element may be movable towards the inkjet printhead unit (607), more specific to the nozzles of the inkjet printhead to tension or to stretch the hide (402) at the position wherein the supporting element is supporting the hide (402) (FIG. 10).

The clamping unit with pivotal beam (1080) may be detachable from a base-plate from the rigid support (107) and attached on another position of the base-plate (FIG. 11). The shape of a hide (402) and total of an area from a hide (402) has so many variants due to origin and size of animal that a removable clamping unit with pivotal beam (1080) is a big advantage for versatility of the digital leather printer.

The pivotal beam (1080) and/or stationary beam (1180) and/or base plate (207) comprises preferably a thermoplastic polymer resin or is made of thermoplastic polymer. It is an advantage if the pivotal beam (1080) and/or stationary beam (1180) and/or base plate (207) has a high chemical resistance, high UV (ultra-violet) resistance, high thermal shock resistance, high mechanical resistance, easy machinable (for milling/grinding), low liquid absorbance, high electrical and/or high impact resistant properties which is achievable when the pivotal beam (1080) and/or stationary beam (1180) comprises a thermoplastic polymer, such as engineering plastic compositions and in a preferred embodiment polyethylene terephthalate (PET), polyamide (PA), high-density polyethylene (HDPE), polytetrafluoroethylene (PTFE), polyoxymethylene (POM) and/or Polyaryletherketone (PAEK), whereof polyethylene terephthalate (PET) is most preferred, due its wear resistance, wet or dry, chemical resistance, and medium cost range. PET also remains stiffer at higher temperatures than pivotal beam (1080) and/or stationary beam (1180)s comprising other thermoplastic polymer resins. The high resistance properties are an advantage because the support layer maybe support to ink spilling, weight of ink receivers, temperature changing's, and/or UV light. The pivotal beam (1080) and/or stationary beam (1180) may also comprise aliphatic polyamides, polyamide 11 (PA 11), polyamide 12 (PA 12), UHM-HDPE, HM-HDPE, Polypropylene (PP), Polyvinyl chloride (PVC), Polysulfone (PS), Poly(p-phenylene oxide) (PPOTM), Polybutylene terephthalate (PBT), Polycarbonate (PC), Polyphenylene sulphide (402) (PPS).

The pivotal beam (1080) and/or stationary beam (1180) are preferably rounded at their edges to avoid scratches on the hide.

The pivotal beam (1080) and/or stationary beam (1180) and/or base plate (207) may be made of aluminium or an alloy of it to lower the weight of the pivotal beam (1080) and/or stationary beam (1180) and/or base plate (207) so it is easily and ergonomically removable from the digital leather printer. Aluminium is remarkable for the metal's low density and its ability to resist corrosion, which is a benefit for the strength of the rigid support (107) and especially for the strength of the pivotal beam (1080) and/or stationary beam (1180).

### Clamping method 4

The shape of each hide (402) is different for each piece because it depends on the size of the animal and the cut off during the tanning process. This is different in current digital printing wherein the substrates are in most cases rectangular or have the same shape and size. That is why supports for these substrates are also rectangular in the current digital decoration printing. The rectangular shape of these substrates makes it easier for providing, supporting, and transporting such substrates, such as paper on a digital printing device.

In the preferred embodiment, the rigid support (107) is a plurality of prisms, which are connected to each other to form a ring of prisms (308). Preferred embodiments of this clamping method are illustrated in the figures from 22 to 28. Each prism in the ring of prisms (308) comprises a first and second slanted faces, preferably slanted at an equal angle. The prisms, preferably isosceles prisms, adjacent one another with a first slanted face of one prism is assembled in abutment with the second slanted face of the adjacent prism to form a ring of prisms (308), preferably a ring of isosceles prisms. The ring is formed to have a plane surface for supporting the hide. The assembly is preferably made possible by a projection provided on the first slanted face and indentation (218) provided on the second slanted face at positions corresponding to the positions of the projection. A projection of a prism is for the assembly connected to the indentation (218) of another prism. The ring is a chain of prisms (308) which is formed to a ring by connecting the prism at a first end of the chain with the second end of the chain with a first slanted face of the prism at the first end of the chain with the second slated face of prism at the second end of the chain. This is called a closed chain of plurality of prisms. The length of the chain can be enlarged by applying other prisms so the prisms in the enlarged chain adjacent one another with a first slanted face of one prism is assembled in abutment with the second slanted face of the adjacent prism. This enlargement may be needed when a new to-be-supported hide needs to be mounted on the rigid support (107) but which is larger than the current supported hide.

A prism may be a triangular prism, isosceles trapezoidal prism or parallelepiped and preferably, the prism is an isosceles prism. The plurality of prisms in this preferred embodiment may be a combination of triangular prisms, trapezoidal prisms or parallelepiped or only triangular prisms or trapezoidal prisms or parallelepiped or L-shaped prisms or arc-shaped prisms. The prisms are preferably rounded at their edges to avoid scratches on the hide.

The prisms adjacent one another may be rotatable connected at the slanted faces so the isosceles prisms are rotatable for an angle of 360°

By rotating several prisms, another shape can be formed to become a flat rigid support (107) whereon a hide (402) can be supported on a plurality of faces from prisms. It is with this ring of prisms (308) that the shape of the hide (402) can be followed and it is with this ring another shape can easily be formed for following the shape of another hide (402).

The clamping unit; which clamps an edge of a hide; is attached to a free face of a prism so the edge is clamped opposite to the side of the flat decoration area, thus outside the flat decoration area. The preferred clamping unit is the disclosed clamping unit with the pipe-shaped body (119) as disclosed above (see also FIG. 36, FIG. 37, FIG. 38 and FIG. 39).

Another face of the prism may be attached to a base-plate for a better fixation of the ring of prisms (308) to the digital leather printer. It may be attached for example by screws, bolts or any other suitable attaching means wherein preferably the ring of prisms (308) can also be de-attached from the digital leather printer when another hide (402) have to be mounted on the rigid support (107). Such attaching means is preferably a quick release fastener. The ring of prisms (308) may also be air-sucked against a vacuum table (327) which is comprised in the rigid support (107).

The clamping unit is preferably not harmful for the hide (402) when the clamping unit grasps only a few centimetres of the margin of the hide (402), thus an edge of the hide. The clamping unit comprises a coupler for coupling the clamping unit to thee free face of the prism so the edge is clamped opposite to the side of the flat decoration. The clamping unit may also comprise a stretcher wherein the clamped edge of the hide is brought narrower to the free face of the prism. The advantages of tensioning and stretching is disclosed above.

The rigid support (107) may comprise a support table (307), preferably a vacuum table (327). Wherein the ring of prisms (308) is positioned around the rigid support (107). The hide (402) on top of the vacuum table (327) is hold down by the pressure differential between vacuum chamber (317); which is connected to the vacuum table (327) and the outside air. The holding down is preferably while applying a base coat (126), printing and/or applying a top coat. The vacuum table (327) may comprise a flat segment, as element for supporting the hide (402), wherein the flat segment is movable parallel to the plane wherein the nozzles of the inkjet printhead unit (607) are positioned. This movable supporting element may be used to position the hide (402), especially stiff hide (402) or to influence the internal tension of a part of the hide (402), which is in contact with the movable supporting element.

The prism comprises preferably a thermoplastic polymer resin or is made of thermoplastic polymer. It is an advantage if the prism has a high chemical resistance, high UV (ultra-violet) resistance, high thermal shock resistance, high mechanical resistance, easy machinable (for milling/grinding), low liquid absorbance, high electrical and/or high impact resistant properties which is achievable when the prism comprises a thermoplastic polymer, such as engineering plastic compositions and in a preferred embodiment polyethylene terephthalate (PET), polyamide (PA), high-density polyethylene (HDPE), polytetrafluoroethylene (PTFE), polyoxymethylene (POM) and/or Polyaryletherketone (PAEK), whereof polyethylene terephthalate (PET) is most preferred, due its wear resistance, wet or dry, chemical resistance, and medium cost range. PET also remains stiffer at higher temperatures than prisms comprising other thermoplastic polymer resins. The high resistance properties are an advantage because the support layer may be support to ink spilling, weight of ink receivers, temperature changing's, and/or UV light. The prism may also comprise aliphatic polyamides, polyamide 11 (PA 11), polyamide 12 (PA 12), UHM-HDPE, HM-HDPE, Polypropylene (PP), Polyvinyl chloride (PVC), Polysulfone (PS), Poly(p-phenylene oxide) (PPOTM), Polybutylene terephthalate (PBT), Polycarbonate (PC), Polyphenylene sulphide (402) (PPS).

The prism may be made of aluminium or an alloy of it to lower the weight of the prism and/or base plate (207) so it is easily and ergonomically removable from the digital leather printer. Aluminium is remarkable for the metal's low density and its ability to resist corrosion, which is a benefit for the strength of the rigid support (107) and especially for the strength of the prism.

A prism of a ring of prisms (308) may comprising a vacuum hole or more vacuum holes, which are connected to one or more vacuum chamber (317)s and one or more vacuum pumps. The hide (402) on top of this prism is hold down by the pressure differential between a vacuum chamber (317) and the outside air (FIG. 28).

### Base coats

The base coat (126) applied on the hide (402), such as crusted leather (136) is required to provide a level of image quality commensurate to the luxury aspect of leather as the low viscosity of inkjet inks lets them penetrate rapidly into the leather resulting in poor image quality.

The base coat (126) preferably includes a polymer or copolymer based on polyurethane, as this has been found to improve flexibility to the printed leather. The base coat (126) preferably further includes a polyamide polymer or copolymer, as polyamide has been found to improve the compatibility with the crust leather and to improve the strength of the base coat (126).

Suitable polyurethanes include Urepal^{™} PU147 and PU181 from CHEMIPAL S.p.A.; Melio^{™} Promul 61 from STAHL; Astacin^{™} Finish PS from BASF; Ecrothan^{™} 4075, 4078 and 4084 from MICHELMAN; Incorez^{™} CS8073 and CS065-195 from INCOREZ.

Suitable polyamides include the PA emulsion types ED310 and 161148 CX from MICHELMAN.

Although polyurethanes and/or polyamides are preferred as the polymers for the base" coat, other polymers may be used preferably in combination with the polyurethanes and/or polyamides. Such polymers preferably have an elongation at break of more than 200%, more preferably 300%. The elongation at break is measured according to ISO527-2, for example, with a MTS Exceed^{™} testing apparatus from MTS Systems Corporation.

A suitable polymeric acrylate emulsion is Bioflex^{™} KGA from LMF Biokimica.

A cross-linker may be incorporated in the base coat (126) to improve the strength of the base coat (126) and the adhesion to crust leather. Preferred cross-linkers include aldehyde based cross-linkers such as formaldehyde, melamine formaldehyde derivatives, urea formaldehyde resins, glyoxal and gluraraldehyde, epoxides, oxazolines, carbodiimides and isocyanates, isocyanates being particularly preferred.

The base coat (126) may be applied by spraying or by any coating technique known, such as knife coating, extrusion coating, slide hopper coating and curtain coating.

Pigments are included for providing a chromatic or achromatic colour to the base coat (126). Both organic and inorganic pigments may be used, although inorganic pigments are preferred because of their light fastness.

As achromatic colours, a white or grey colour may be used. A white colour is obtained by including a white pigment such as titanium dioxide, zinc oxide, calcium carbonate. The white pigment is preferably a pigment with a refractive index greater than 1.60, preferably greater than 2.00, more preferably greater than 2.50 and most preferably greater than 2.60. White pigments may be employed singly or in combination. Preferably, titanium dioxide is used for the pigment with a refractive index greater than 1.60. Titanium dioxide occurs in the crystalline forms of anatase type, rutile type and brookite type. The anatase type has a relatively low density and is easily ground into fine particles, while the rutile type has a relatively high refractive index, exhibiting a high covering power. Either one of these is usable in this invention.

The numeric average particle diameter of the titanium dioxide is preferably at least 200 nm and preferably no more than 1 µm. Sufficient hiding power cannot be obtained when the average diameter is less than 200 nm, and an average diameter exceeding 1 µm tends to change the touch and feel of the leather.

Preferably, an amount of at least 2 g/m², more preferably at least 4 g/m² and most preferably at least 6 g/m² of white pigment, preferably titanium dioxide is used to mask colour inconsistencies and surface defects in the crust leather.

A grey colour can be obtained by adding a black pigment to the white pigment already present in the base coat (126). Examples of black pigments are carbon blacks, such as the channel black known as Exelsior sold by Columbian Carbon or Superba or other channel or furnace blacks, e.g., Columbian Carbons Raven 11, Raven l5 and Raven 30, or Monsanto' s 01 lampblack. The term "grey colour" as used in the present invention refers to a lightness L* that is within 50 to 100%, while the term "black colour" refers to a lightness L* within 0 and 10%. Lightness is an attribute of object colours by which the object appears to reflect or transmit more or less of the incident light. The skilled person in inkjet printing is very familiar with the concept of lightness and CIELAB1976 is used for determining the lightness value L*.

There is no limitation on the colour pigment for producing a chromatic colour of the base coat (126). For example, brown pigments may be used such as Mapico Brown 422 of Columbian Carbon, or combinations of Red Iron Oxide R 8098 and Yellow Iron Oxide LO 1888B, both supplied by C. K. Williams & Co. Other suitable pigments are DuPonts Phthalocyanine Blue HT 284D, Phthalocyanine Green GT 674D, Monastral Red RT 790D, Chloride White R 900, Monastral Scarlet RT 787D, Harmon Bon Maroon MB 13 and Interchemical Vat Yellow 212896.

There is also no limitation on the amount of colour pigment in the base coat (126) for producing a chromatic colour, as this is determined by the decorative image.

### Printing devices

The one or more pigmented inkjet ink, preferably UV curable based pigmented inkjet ink, are jetted by one or more printheads ejecting small droplets in a controlled manner through nozzles onto natural leather moving relative to the printhead(s). The digital leather printer (FIG. 40, FIG.41, FIG. 42, FIG. 43, FIG. 44) is preferably configured for:
a) positioning a hide on a rigid support
b) fastening the positioned hide by a clamping method
d) jetting a decorative image on the fastened hide and optional
c) applying a base coat (126), preferably with a non-impact printing technology
   and optional
e) applying a protective top coat (106), preferably with a non-impact printing technology.

The base coat (126) is preferably pressed on the fastened hide and more preferably heat-pressed on the fastened hide and/or dried by a dry-unit (507)

The protective top coat (106) is preferably dried by a dry-unit (507)

The rigid support is preferably (de)attachable from the digital leather printer Preferably the attachment of the rigid support is performed by screws, bolts or any other suitable attaching means, such as quick release fasteners. The rigid support may also be attached by air-suction on a vacuum belt (407) or vacuum table (327). The hide may be tensioned on the rigid support or stretched on the rigid support.

The rigid support may be frame or a table whereon a hide (402) is positioned and wrapped around the edges of the rigid support where the edges are clamped by leather clamps opposite to the side of the flat decoration area (see FIG. 31, FIG. 32, FIG. 33, FIG. 34, FIG. 35).

The rigid support may comprise an RFID-tag. Radiofrequency identification (RFID) uses electromagnetic fields to automatically identify and track tags attached to objects. The tags contain electronically stored information, which are readable and adaptable. The rigid support may comprise an optical machine-readable code that also contains information.

Information can be used for authenticating the provided hide on the rigid support. The steps in the manufacturing of natural leather can then be controlled by reading the information from the RFID-tag or the optical machine-readable code and interpreting the information. The information can be used for track-and-trace the hides on the rigid supports in the manufacturing of natural process or in the tannery.

A typical dry-unit, shortly a dryer, comprises an ultraviolet light (UV) source and/or infrared (IR) source. The drying may be done by radiation (UV and/or IR and/or NIR and/or SWIR). The IR source is preferably a NIR source (=Near Infra-Red source) such as a NIR lamp or a SWIR (=Short Wave Infra-Red source) such as a SWIR lamp. The IR source may comprise carbon infrared emitters which has a very short response time. An IR source is also called infrared radiation source. The IR source may comprise an air blower for blowing hot air warmed up by the IR source.

The heat-pressing is done by a heat-press unit (for example a Secabo^{™} TPD12, which is pneumatic transfer press) at a temperature between 110° and 190°C and a pressure between 2 and 6 bar and between 15 and 60 seconds.

A preferred printhead for the inkjet printing system is a piezoelectric head. Piezoelectric inkjet printing is based on the movement of a piezoelectric ceramic transducer when a voltage is applied thereto. The application of a voltage changes the shape of the piezoelectric ceramic transducer in the printhead creating a void, which is then filled with inkjet ink or liquid. When the voltage is again removed, the ceramic expands to its original shape, ejecting a drop of ink from the printhead.

A preferred piezoelectric printhead is a so-called through-flow piezoelectric drop-on-demand printhead. By using through-flow printheads, the reliability is enhanced and thus a more efficient and economical method of manufacturing high quality decorated natural leather articles is obtained. Such a printhead is, for example, available from TOSHIBA TEC as the CF1- printhead.

The present invention allows printing the decorative image on the decoration area; whether or not base-coated, with high resolution above 300 dpi, even above 1800 dpi and to printed hide by using the same resolution. "dpi" is an abbreviation of "dots-per-inch" is a measure of spatial printing, in particular the number of individual dots that can be placed in a line within the span of 1 inch (2.54 cm). The present invention is directed to provide a method for printing hides, such as crusted natural leather, which allows for customized printing thereby being capable of small quantity batch production?

However, the inkjet printing method according to the present invention is not restricted to piezoelectric inkjet printing. Other inkjet printheads can be used and include various types, such as a continuous type printhead.

The inkjet printhead normally scans back and forth in a transversal direction across the moving leather surface, known as a multi-pass printing mode. Sometimes the inkjet printhead does not print on the way back. Bidirectional printing is however preferred for obtaining a high areal throughput.

Another preferred printing method is by a "single pass printing process", which can be performed by using so-called page wide inkjet printheads or multiple staggered inkjet printheads that cover the entire width of the leather surface. In a single pass printing process, the inkjet printhead unit usually remain stationary and the hide (402), such as crusted leather (136), is transported under the inkjet printhead unit (607). An advantage of using a multi-pass printing mode is that the UV curable inkjet ink is cured in a consecutive passes, rather than in a single pass, which would require a curing device with a high UV output.

The printhead lifetime is also larger for multi pass printing. While in single pass printing one side shooter is sufficient to replace the whole printhead, in multi pass printing side shooters and even failings can be tolerated to a certain level. In addition, the cost of a multi-pass printer is usually much lower, especially for large format hide. Summarizing it can be stated that high image quality can be obtained in a more reliable and economical manner by multi-pass inkjet printing than by single pass printing.

More information about inkjet print devices is disclosed in STEPHEN F. POND. Inkjet technology and Product development strategies. United States of America: Torrey Pines Research, 2000. ISBN 0970086008.

### Curing Devices

UV curable based pigmented inkjet inks are cured by ultraviolet radiation. UV is the abbreviation of ultra-violet. The UV curing device may be arranged in combination with the printhead of the inkjet printer, travelling therewith so that the UV curable inkjet ink is exposed to curing radiation very shortly after been jetted. This method of curing is called 'UV-pinning' and helps to provide a high image quality, such as high sharpness. UV-pinning is often followed by a second overall UV curing step, when the UV dose in UV-pinning is insufficient to obtain full cure.

Any ultraviolet light source, as long as part of the emitted light can be absorbed by the photo-initiator or photo-initiator system, may be employed as a radiation source, such as, a high or low pressure mercury lamp, a cold cathode tube, a black light, an ultraviolet LED, an ultraviolet laser, and a flash light. Of these, the preferred source is one exhibiting a relatively long wavelength UV-contribution having a dominant wavelength of 300-400 nm. Specifically, a UV-A light source is preferred due to the reduced light scattering therewith resulting in more efficient interior curing.

UV radiation is generally classed as UV-A, UV-B, and UV-C as follows:
UV-A: 400 nm to 320 nm
UV-B: 320 nm to 290 nm
UV-C: 290 nm to 100 nm.

The UV curing and especially UV-pinning is preferably performed using UV LEDs. In a particularly preferred embodiment, the UV curing is performed using UV LEDs having an emission wavelength higher than 370 nm.

UV LEDs have a long lifetime and an almost constant UV dose until the end of life, contrary to e.g. mercury bulbs. Hence, the use of UV LEDs in the inkjet printing process enhances the reliability of the manufacturing method of decorated leather.

For facilitating curing, the inkjet printer may include one or more oxygen depletion units. The oxygen depletion units place a blanket of nitrogen or other relatively inert gas (e.g. CO₂), with adjustable position and adjustable inert gas concentration, in order to reduce the oxygen concentration in the curing environment. Residual oxygen levels may be maintained as low as 200 ppm, but are generally in the range of 200 ppm to 1200 ppm.

### (UV Curable) Pigmented Inkjet Inks

The one or more pigmented inkjet inks preferably contain organic colour pigments as they allow for obtaining a high colour gamut on natural leather. Carbon black and titanium dioxide are inorganic pigments, which can be advantageously used in the present invention for composing black respectively white pigmented inkjet inks.

A colour pigment may be chosen from those disclosed by HERBST, Willy, et al. Industrial Organic Pigments, Production, Properties, Applications. 3rd edition. Wiley - VCH , 2004. ISBN 3527305769. Suitable colour pigments are disclosed in paragraphs [0128] to [0138] of WO 2008/074548 (AGFA GRAPHICS).

In a preferred embodiment, the one or more pigmented inkjet inks form a CMYK(W) or CRYK(W) inkjet ink set; wherein C means cyan, M means magenta, Y means yellow; K means black; W means white and R means red.

Pigment particles in inkjet inks should be sufficiently small to permit free flow of the ink through the inkjet-printing device, especially at the ejecting nozzles. It is also desirable to use small particles for maximum colour strength and to slow down sedimentation.

The numeric average pigment particle size of an organic colour pigment and an inorganic black pigment is preferably between 0.050 and 1 µm, more preferably between 0.070 and 0.300 µm and most preferably between 0.080 and 0.200 µm. The determination of the numeric average particle diameter is best performed by photon correlation spectroscopy at a wavelength of 633 nm with a 4mW HeNe laser on a diluted sample of the pigmented inkjet ink. A suitable particle size analyzer used was a Malvern^{™} nano-S available from Goffin-Meyvis. A sample can, for example, be prepared by addition of one drop of ink to a cuvette containing 1.5 mL ethyl acetate and mixed until a homogenous sample was obtained. The measured particle size is the average value of 3 consecutive measurements consisting of 6 runs of 20 seconds.

A white pigment preferably has a numeric average pigment particle size larger than 180 nm in order to have a strong opacifying capability. Suitable white pigments are given by Table 2 in [0116] of WO 2008/074548 (AGFA GRAPHICS). The white pigment is preferably a pigment with a refractive index greater than 1.60. The white pigments may be employed singly or in combination. Preferably, titanium dioxide is used as pigment with a refractive index greater than 1.60. Suitable titanium dioxide pigments are those disclosed in [0117] and in [0118] of WO 2008/074548 (AGFA GRAPHICS).

When using UV curable pigmented inkjet inks, polymerizable compounds and one or more photoinitiators are present in the inkjet ink.

Any polymerizable compound commonly known in the art may be employed. The polymerizable compound may be any monomer or oligomer found in the Polymer Handbook Vol 1 + 2, 4th edition, edited by J. BRANDRUP et al., Wiley-Interscience, 1999 . An oligomer in the present invention is understood to contain 2 to 8 repeating monomeric units. Preferred monomers and oligomers are those listed in [0106] to [0115] in EP 1911814 A (AGFA).

Preferably, a monomer or oligomer capable of free radical polymerization is used as polymerizable compound. A combination of monomers, oligomers and/or prepolymers may also be used. The monomers, oligomers and/or prepolymers may possess different degrees of functionality, and a mixture including combinations of mono-, di-, tri-and higher functionality monomers, oligomers and/or prepolymers may be used. However preferably an amount of at least 60 to 100 wt% of monofunctional polymerizable compounds is used in the UV curable pigmented inkjet ink with the wt% based on the total weight of the inkjet ink. The viscosity of the radiation curable inkjet inks can be adjusted by varying the amount of specific monomers and oligomers.

In a particularly preferred embodiment of the manufacturing method for decorating leather, the one or more pigmented UV curable inkjet inks contain 1 to 20 wt% of polyfunctional monomers and oligomers based on the total weight of the pigmented UV curable inkjet ink. An upper limit of 20 wt% provides good scratch resistance with impairing flexibility.

The UV curable inkjet ink contains one or more photoinitiators, preferably one or more free radical photoinitiators. A free radical photoinitiator is a chemical compound that initiates polymerization of monomers and oligomers when exposed to actinic radiation by the formation of a free radical.

Suitable photo-initiators are disclosed in CRIVELLO, J.V., et al. VOLUME III: Photoinitiators for Free Radical Cationic . 2nd edition. Edited by BRADLEY, G.. London,UK: John Wiley and Sons Ltd, 1998. p.287-294.

In a particularly preferred embodiment, the one or more photoinitiators include an acylphosphine oxide photoinitiator and a thioxanthone photoinitiator. Such a combination allows for fast UV curing with UV LEDS emitting above 370 nm. UV LEDs are more economical in operating the inkjet printing process than mercury lamps.

In order to increase the photosensitivity further, the UV curable inkjet ink may additionally contain co-initiators. Suitable examples of co-initiators can be categorized in three groups: (1) tertiary aliphatic amines, such as methyldiethanolamine and N-methylmorpholine; (2) aromatic amines such as 2-(dimethylamino) ethylbenzoate; and (3) (meth)acrylated amines such as dialkylamino alkyl(meth)acrylates and N-morpholinoalkyl-(meth)acrylates. The preferred co-initiators are aminobenzoates.

A preferred amount of photoinitiator and co-initiator is 0.1 - 30 wt%, and most preferably 5 - 15 wt% of the total weight of the UV curable inkjet ink.

The one or more pigmented inkjet inks may contain further additives such as surfactants, polymerization inhibitors and dispersants for the colour pigments.

The preparation of pigmented UV curable inkjet inks is well known to the skilled person. Preferred methods of preparation are disclosed in paragraphs [0076] to [0085] of WO 2011/069943 (AGFA).

### Decorative image

A decorative image is achieved by suitable commercially available hardware, such as scanning a photograph or taking an image by a digital camera, and commercially available software, such as Adobe Photoshop^{™} to manipulate and create decorative images or it may be designed by commercially available software such as Adobe Illustrator^{™}.

A decorative image is preferable rectangular shaped but it can also be triangular, quadratic, rectangular, heptagonal, pentagonal, octagonal, elliptical shaped or hide-shaped. A decorative image may have a side with 1 or more curved parts. The advantage of rectangular shaped decorative image is the ease of cutting to a finished natural leather, which may be a step of the embodiment. Rectangular or non-rectangular shaped decorative images may be cut by cutting plotters. The use of cutting plotters is more time-consuming but non-rectangular shaped decorative images expand the amount of assembling creations of finished natural leather, such as footwear, furniture, upholstery, bags and luggage, gloves, belts, wallets, clothing, automotive leather (e.g. train, plane, boat and car seats), interiors, books, stationary, packaging, equestrian articles, and the like.

The content of a decorative image is preferable defined in raster graphics format such as Portable Network Graphics (PNG), Tagged Image File Format (TIFF) with or without the BigTIFF File Format proposal of Joris Van Damme (www.awaresystems.be), Adobe Photoshop Document (PSD) or Joint Photographic Experts Group (JPEG) or bitmap (BMP) but more preferably in vector graphics format. Preferred vector graphics formats are Scale Vector Graphics (SVG) and AutoCad Drawing Exchange Format (DXF) and most preferably the decorative image is embedded in a page description language (PDL) such as Postscript (PS) or Portable Document Format (PDF).

A decorative image may be stored and/or loaded as one or more files on a memory of a computer. The embodiment may comprise a method to load a decorative image into a memory of a computer, for example to provide bitmap rows of the decorative image to the data-streamer.

A decorative image may be a continuous tone image (CT) or a raster image. A continuous tone image is an image wherein each position, also called pixel, may have a very large number of values to represent a tone and/or colour, such as a digital image captured by a digital camera. A raster image is the result of a halftoning method on a continuous tone image to make it printable on an industrial inkjet system so the raster image has the same spatial and tonal resolution as the industrial inkjet system. Each position in a raster image has a limited number of values to represent a tone and/or colour.

In a preferred embodiment the decorative image, each pixel for each colourant channel has a tone value from 0 to (2^{N}-1) wherein N is preferably eight or more preferably sixteen.

The colourant space of a decorative image is preferably an RGB-space, such as the standard RGB colour space sRGB created cooperatively by HP and Microsoft in 1996 for use on monitors, printers and the Internet. To convert the decorative image to the colourant space of an digital leatherprinter, a preferred embodiment of the present invention may comprise a method to convert decorative images from a first colourant space to a second colourant space by a colour management system and in a more preferred embodiment the image conversion between these two colourant space is achieved by a set of ICC-profiles, which is a set of data that characterizes a colour input and/or output device and/or a colour space, according to standards promulgated by the International Colour Consortium (ICC).

In a preferred embodiment of the present invention the decorative image is halftoned to a raster image by a halftone management system with a dithering method such as an amplitude modulated (AM) halftoning method and a frequency modulated (FM) halftoning method or with an error diffusion (ED) halftoning method. A preferred halftoning method is halftoning the decorative image with a cross modulated (XM) halftoning method which achieves automatic, artefact-free, high resolution raster images. XM applies FM screening steps in the highlights and/or shadows to capture fine details and AM screening steps in the midtones to achieve smooth gradations. A cross modulated (XM) screening method is an example of a hybrid AM screening step.

The halftoning method in a halftone management system and/or the colour conversion in a colour management system may be performed by one or more graphic processing units (GPU's) which preferably be comprised in the digital leather printer of the present invention. The use of GPU's enhances the calculation force to prepare fast bitmap rows for transmitting to an inkjet printhead unit (607) of the digital leather printer.

### Other preferred embodiments

The inkjet printing method of the present invention and present preferred embodiments may comprise additional steps:
- scanning the flat decoration area for defects-detection
- selecting a quality zone on the flat decoration area with a determined leather-grade; and
wherein the printing of the decorative image and/or applying the base coat (126) and/or applying the top coat is in the selected quality zone.

A leather-grade is a grade in a ranking of the quality for leather.

The inkjet printing method of the present invention and present preferred embodiments may comprise additional steps:
- cutting and/or embossing the printed decoration area for inkjet printed leather (146) upholstery; and/or
- applying a protective top coat (106) by a liquid on the printed pattern; and/or
- heat-pressing the printed decoration area by a heat press unit (87).

**Reference signs list**

| | | | |
|---|---|---|---|
| 31 | outer frame | 317 | vacuum chamber |
| 32 | inner frame | 321 | inner frame |
| 102 | painted hide | 322 | inner frame |
| 103 | leather clamp | 327 | vacuum table |
| 104 | butt | 402 | hide |
| 105 | grain | 404 | leg |
| 106 | protective top coat | 417 | conveying direction |
| 107 | rigid support | 427 | pulley |
| 108 | chain of rotatable prisms | 502 | stacker |
| 109 | grip surface | 504 | belly |
| 115 | junction of grain and corium | 507 | coating unit |
| 116 | inkjet printed decorative image | 601 | slaughter house |
| 118 | forming | 62 | operator |
| 119 | pipe-shaped body | 11 | tannery |
| 125 | corium | 621 | leather article manufacturer |
| 126 | base coat | 607 | inkjet printhead unit |
| 129 | tapered body | 702 | conveyor belt |
| 135 | flesh | 707 | dry unit |
| 136 | crusted leather | 87 | heat press unit |
| 145 | split leather | 807 | vacuum channel |
| 146 | inkjet printed leather | 817 | air-sucking |
| 202 | drying chamber | 1010 | rod |
| 203 | frame | 1080 | pivotal beam |
| 204 | shoulder | 1110 | head (of a rod) |
| 205 | fat | 1180 | stationary beam |
| 207 | base plate | 1210 | tensioning unit |
| 208 | slanted face of a prism | 1280 | clamping unit as support |
| 215 | vein | 1282 | clamping unit as clamp |
| 218 | indentation | 1285 | pivoting |
| 225 | artery | 1310 | stretching unit |
| 235 | sweat glands | 1315 | stretching |
| 245 | erector pili muscle | 1410 | used pin |
| 255 | epidermis | 1415 | moving upwards |
| 265 | sebaceous gland | 1510 | unused pin |
| 275 | hair shaft | 8075 | press unit |
| 285 | hair root | 9101 | phase 1: preparation |
| 302 | painting chamber | 9201 | phase 2: tanning |
| 304 | neck | 9301 | phase 3: crusting |
| 307 | support table | 9401 | phase 4: finishing |
| 308 | ring of prisms | 9501 | phase 5: leather article manufacturing |
| 407 | vacuum belt | | |

## Claims

1. An inkjet printing method on natural leather comprising the steps:
a) providing a hide (402), having an edge, on a rigid support (107) for obtaining a flat decoration area of the hide (402);
b) fastening the hide (402) to the rigid support (107) by clamping the edge; and
c) jetting with a inkjet printhead unit (607), facing a side of the flat decoration area, a decorative image on the flat decoration area of the fastened hide; and wherein the edge is clamped opposite to the side of the flat decoration area.

2. An inkjet printing method on natural leather according to claim 1 comprising an additional step between step a) and c) of applying with a coating unit (507) a base coat (126) on the flat decoration area of the fastened hide; wherein the decorative image is jetted on the base coat (126).

3. An inkjet printing method on natural leather according to claim 2 wherein the additional step of applying a base coat (126) is between step b) and c).

4. An inkjet printing method on natural leather according to claim 2 or to claim 3 wherein the base coat (126) includes a polymer or copolymer based on polyurethane.

5. An inkjet printing method on natural leather according to anyone of the claims from 1 to 5 comprising an additional step of tensioning or stretching the hide (402) towards the edge while the edge is clamped opposite to the side of the flat decoration area and during the applying of base coat (126) and/or jetting the decorative image.

6. An inkjet printing method according to anyone of the claims from 1 to 5 wherein
- the edge is clamped between an outer side of the rigid support (107) and an outer frame (31) that matches the outer side of the rigid support (107); or
- the rigid support (107) comprises a plurality of rods (1010) as supporting points for the positioned hide (402) and wherein the edge of the hide is fastened to a rod (1010) from the plurality of rods (1010) by a clamping unit; or
- the rigid support (107) may comprise a plurality of clamping units whereon each clamping unit a pivotal beam (1080) and a stationary beam (1180) are connected and wherein the pivotal beam (1080) is pivoted parallel to the inkjet printhead unit (607) for supporting the hide (402) or the pivotal beam (1080) is pivoted opposite to the side of the flat decoration area for clamping the edge of the hide between the pivotal beam (1080) and stationary beam (1180); or
- the rigid support (107) comprises:
- a plurality of prisms which are connected to each other to form a ring of prisms (308).

7. An inkjet printing method according to anyone of the claims 1 to 6 wherein the hide (402) is crusted leather (136).

8. A digital leather printer comprising
- a rigid support (107) for supporting a hide (402) and obtaining a decoration area of the hide (402); and
- a clamping unit for fastening the hide (402) to the rigid support (107) by clamping an edge of the hide; and
- an inkjet printhead unit (607), facing a side of the decoration area;
wherein the clamping unit is positioned on the opposite side of the flat decoration area, facing the inkjet printhead unit (607).

9. A digital leather printer according to claim 8 comprising a coating unit (507) for coating a base coat (126) on the flat decoration area of the fastened hide.

10. A digital leather printer according to claim 9 comprising:
- a stretching unit (1310) for stretching the hide (402) and/or
- a tensioning unit (1210) for flattening the hide (402)

11. A digital leather printer according to anyone of the claims from 8 to 9 wherein the clamping unit comprises an outer frame (31), which matches an outer side of the rigid support (107) for clamping the edge between the outer side of the rigid support (107) and an outer frame (31).

12. A digital leather printer according to anyone of the claims from 8 to 9 wherein the rigid support (107) comprises a plurality of rods (1010) as supporting points for supporting the hide (402) and wherein the clamping unit clamps the edge to a rod (1010) from the plurality of rods (1010).

13. A digital leather printer according to anyone of the claims from 8 to 9 wherein the rigid support (107) comprises a plurality of clamping units whereon each clamping unit a pivotal beam (1080) and a stationary beam (1180) are connected and wherein the pivotal beam (1080) is pivoted parallel to the inkjet printhead unit (607) for supporting the hide (402) or the pivotal beam (1080) is pivoted opposite to the side of the flat decoration area for clamping the edge of the hide between the pivotal beam (1080) and stationary beam (1180).

14. A digital leather printer according to anyone of the claims from 8 to 9 wherein the rigid support (107) comprises:
- a plurality of prisms which are connected to each other to form a ring of prisms (308).

15. A digital leather printer according to anyone of the claims from 10 to 14 wherein the digital leather printer is an UV inkjet printer and the hide (402) is crusted leather (136).

16. Use of a clamping unit for obtaining a flat decoration area of a hide (402) on a rigid support (107) of an inkjet printer by clamping an edge of the hide opposite to the side of the flat decoration area facing a inkjet printhead unit (607).

## Patentansprüche

1. Ein Tintenstrahldruckverfahren auf natürlichem Leder, das die folgenden Schritte umfasst:
a) Anlegen einer Haut (402), mit einem Rand, auf einen starren Träger (107) zum Erhalt eines flachen Dekorationsbereichs der Haut (402),
b) Befestigen der Haut (402) auf dem starren Träger (107) durch Einklemmen des Rands, und
c) Aufsprühen, mittels einer einer Seite des flachen Dekorationsbereichs zugewandten Tintenstrahldruckkopfeinheit (607), eines dekorativen Bildes auf den flachen Dekorationsbereich der befestigten Haut, und
wobei der Rand gegenüber der Seite des flachen Dekorationsbereichs eingeklemmt wird.

2. Ein Tintenstrahldruckverfahren auf natürlichem Leder nach Anspruch 1, umfassend einen zusätzlichen Schritt zwischen Schritt a) und Schritt c), in dem mittels einer Beschichtungseinheit (507) eine Grundierschicht (126) auf den flachen Dekorationsbereich der befestigten Haut aufgetragen wird, wobei das dekorative Bild auf die Grundierschicht (126) aufgesprüht wird.

3. Ein Tintenstrahldruckverfahren auf natürlichem Leder nach Anspruch 2, wobei der zusätzliche Schritt des Auftrags einer Grundierschicht (126) zwischen Schritt b) und Schritt c) vorgenommen wird.

4. Ein Tintenstrahldruckverfahren auf natürlichem Leder nach Anspruch 2 oder nach Anspruch 3, wobei die Grundierschicht (126) ein Polymer oder Copolymer auf Polyurethanbasis enthält.

5. Ein Tintenstrahldruckverfahren auf natürlichem Leder nach einem der Ansprüche 1 bis 5, umfassend einen zusätzlichen Schritt, in dem die Haut (402) zum Rand gestreckt oder gespannt wird, während der Rand während des Auftrags der Grundierschicht (126) und/oder des Aufsprühens des dekorativen Bildes gegenüber der Seite des flachen Dekorationsbereichs eingeklemmt wird.

6. Ein Tintenstrahldruckverfahren nach einem der Ansprüche 1 bis 5, wobei
- der Rand zwischen einer Außenseite des starren Trägers (107) und einem der Außenseite des starren Trägers (107) entsprechenden Außenrahmen (31) eingeklemmt wird, oder
- der starre Träger (107) mehrere Stäbe (1010) als Stützpunkte für die aufgelegte Haut (402) umfasst und wobei der Rand der Haut mittels einer Klemmeinheit an einem Stab (1010) der mehreren Stäbe (1010) befestigt wird, oder
- der starre Träger (107) mehrere Klemmeinheiten umfassen kann, wobei mit jeder Klemmeinheit ein Drehbalken (1080) und ein feststehender Balken (1180) verbunden sind und wobei der Drehbalken (1080) parallel zur Tintenstrahldruckkopfeinheit (607) gedreht wird, um die Haut (402) zu unterstützen, oder der Drehbalken (1080) gegenüber der Seite des flachen Dekorationsbereichs gedreht wird, um den Rand der Haut zwischen dem Drehbalken (1080) und dem feststehenden Balken (1180) einzuklemmen, oder
- der starre Träger (107):
- mehrere Prismen, die zur Bildung eines Ringes von Prismen (308) miteinander verbunden sind, umfasst.

7. Ein Tintenstrahldruckverfahren nach einem der Ansprüche 1 bis 6, wobei die Haut (402) Crustleder (136) ist.

8. Ein digitaler Lederdrucker, umfassend
- einen starren Träger (107), der eine Haut (402) unterstützt und mit dem ein Dekorationsbereich der Haut (402) erhalten wird, und
- eine Klemmeinheit, mit der die Haut (402) durch Einklemmen eines Rands der Haut am starren Träger (107) befestigt wird, und
- eine Tintenstrahldruckkopfeinheit (607), die einer Seite des Dekorationsbereichs zugewandt ist,
wobei die Klemmeinheit auf der gegenüberliegenden Seite des flachen Dekorationsbereichs, die der Tintenstrahldruckkopfeinheit (607) zugewandt ist, positioniert wird.

9. Ein digitaler Lederdrucker nach Anspruch 8, umfassend eine Beschichtungseinheit (507) zum Auftragen einer Grundierschicht (126) auf dem flachen Dekorationsbereich der befestigten Haut.

10. Ein digitaler Lederdrucker nach Anspruch 9, umfassend:
- eine Streckeinheit (1310) zum Strecken der Haut (402) und/oder
- eine Spanneinheit (1210), um die Haut (402) flach zu spannen.

11. Ein digitaler Lederdrucker nach einem der Ansprüche 8 bis 9, wobei die Klemmeinheit einen einer Außenseite des starren Trägers (107) entsprechenden Außenrahmen (31), mit dem der Rand zwischen der Außenseite des starren Trägers (107) und einem Außenrahmen (31) eingeklemmt wird, umfasst.

12. Ein digitaler Lederdrucker nach einem der Ansprüche 8 bis 9, wobei der starre Träger (107) mehrere Stäbe (1010) als Stützpunkte zum Unterstützen der Haut (402) umfasst und wobei der Rand mittels der Klemmeinheit an einem Stab (1010) der mehreren Stäbe (1010) befestigt wird

13. Ein digitaler Lederdrucker nach einem der Ansprüche 8 bis 9, wobei der starre Träger (107) mehrere Klemmeinheiten umfasst, wobei mit jeder Klemmeinheit ein Drehbalken (1080) und ein feststehender Balken (1180) verbunden sind und wobei der Drehbalken (1080) parallel zur Tintenstrahldruckkopfeinheit (607) gedreht wird, um die Haut (402) zu unterstützen, oder der Drehbalken (1080) gegenüber der Seite des flachen Dekorationsbereichs gedreht wird, um den Rand der Haut zwischen dem Drehbalken (1080) und dem feststehenden Balken (1180) einzuklemmen.

14. Ein digitaler Lederdrucker nach einem der Ansprüche 8 bis 9,
wobei der starre Träger (107):
- mehrere Prismen, die zur Bildung eines Ringes von Prismen (308) miteinander verbunden sind, umfasst.

15. Ein digitaler Lederdrucker nach einem der Ansprüche 10 bis 14, wobei der digitale Lederdrucker ein UV-Tintenstrahldrucker ist und die Haut (402) Crustleder (136) ist.

16. Verwendung einer Klemmeinheit, um einen flachen Dekorationsbereich einer Haut (402) auf einem starren Träger (107) eines Tintenstrahldruckers zu erhalten, indem ein Rand der Haut gegenüber der einer Tintenstrahldruckkopfeinheit (607) zugewandten Seite des flachen Dekorationsbereichs eingeklemmt wird.

## Revendications

1. Procédé d'impression à jet d'encre sur du cuir naturel comprenant les étapes consistant à:
a) disposer une peau (402) ayant un bord sur un support rigide (107) afin d'obtenir une zone de décoration plate de la peau (402),
b) fixer la peau (402) sur le support rigide (107) en serrant le bord, et
c) projeter, à l'aide d'une unité de têtes d'impression à jet d'encre (607) orientée vers un côté de la zone de décoration plate, une image décorative sur la zone de décoration plate de la peau fixée, et
où le bord est serré face au côté de la zone de décoration plate.

2. Procédé d'impression à jet d'encre sur du cuir naturel selon la revendication 1, comprenant une étape supplémentaire entre l'étape a) et l'étape c) consistant à appliquer, à l'aide d'une unité de couchage (507), un revêtement de base (126) sur la zone de décoration plate de la peau fixée, l'image décorative étant projetée sur le revêtement de base (126).

3. Procédé d'impression à jet d'encre sur du cuir naturel selon la revendication 2, **caractérisé en ce que** l'étape supplémentaire de l'application d'un revêtement de base (126) est effectuée entre l'étape b) et l'étape c).

4. Procédé d'impression à jet d'encre sur du cuir naturel selon la revendication 2 ou selon la revendication 3, **caractérisé en ce que** le revêtement de base (126) contient un polymère ou copolymère à base de polyuréthane.

5. Procédé d'impression à jet d'encre sur du cuir naturel selon l'une quelconque des revendications 1 à 5, comprenant une étape supplémentaire consistant à mettre en tension ou tendre la peau (402) vers le bord lorsque le bord est serré face au côté de la zone de décoration plate et lors de l'application du revêtement de base (126) et/ou de l'application à jet de l'image décorative.

6. Procédé d'impression à jet d'encre selon l'une quelconque des revendications 1 à 5, **caractérisé en ce que**
- le bord est serré entre un côté extérieur du support rigide (107) et un cadre extérieur (31) correspondant au côté extérieur du support rigide (107), ou
- le support rigide (107) comprend une multitude de barres (1010) comme points de support pour la peau positionnée (402) et que le bord de la peau est fixé à une barre (1010) de la multitude de barres (1010) à l'aide d'une unité de serrage, ou
- le support rigide (107) peut comprendre une multitude d'unités de serrage, chaque unité de serrage étant raccordée à une poutre pivotante (1080) et une poutre fixe (1180) et ladite poutre pivotante (1080) pivotant parallèlement à l'unité de têtes d'impression à jet d'encre (607) afin de supporter la peau (402) ou ladite poutre pivotante (1080) pivotant face au côté de la zone de décoration plate afin de serrer le bord de la peau entre la poutre pivotante (1080) et la poutre fixe (1180), ou
- le support rigide (107) comprend:
- une multitude de prismes étant raccordés entre eux afin de former un anneau de prismes (308).

7. Procédé d'impression à jet d'encre selon l'une quelconque des revendications 1 à 6, **caractérisé en ce que** la peau (402) est du cuir en croûte (136).

8. Imprimante numérique pour cuir comprenant
- un support rigide (107) supportant une peau (402) et servant à obtenir une zone de décoration de la peau (402), et
- une unité de serrage servant à fixer la peau (402) au support rigide (107) en serrant un bord de la peau, et
- une unité de têtes d'impression à jet d'encre (607) orientée vers un côté de la zone de décoration,
**caractérisée en ce que** l'unité de serrage est positionnée sur le côté opposé de la zone de décoration plate orientée vers l'unité de têtes d'impression à jet d'encre (607).

9. Imprimante numérique pour cuir selon la revendication 8 comprenant une unité de couchage (507) servant à appliquer un revêtement de base (126) sur la zone de décoration plate de la peau fixée.

10. Imprimante numérique pour cuir selon la revendication 9 comprenant:
- une unité tendeur (1310) servant à tendre la peau (402) et/ou
- une unité de mise en tension (1210) servant à aplanir la peau (402) .

11. Imprimante numérique pour cuir selon l'une quelconque des revendications 8 à 9, **caractérisée en ce que** l'unité de serrage comprend un cadre extérieur (31) correspondant à un côté extérieur du support rigide (107) et permettant de serrer le bord entre le côté extérieur du support rigide (107) et un cadre extérieur (31).

12. Imprimante numérique pour cuir selon l'une quelconque des revendications 8 à 9, **caractérisée en ce que** le support rigide (107) comprend une multitude de barres (1010) comme points de support servant à supporter la peau (402) et que le bord est fixé à une barre (1010) de la multitude de barres (1010) à l'aide de l'unité de serrage.

13. Imprimante numérique pour cuir selon l'une quelconque des revendications 8 à 9, **caractérisée en ce que** le support rigide (107) comprend une multitude d'unités de serrage, chaque unité de serrage étant raccordée à une poutre pivotante (1080) et une poutre fixe (1180) et ladite poutre pivotante (1080) pivotant parallèlement à l'unité de têtes d'impression à jet d'encre (607) afin de supporter la peau (402) ou ladite poutre pivotante (1080) pivotant face au côté de la zone de décoration plate afin de serrer le bord de la peau entre la poutre pivotante (1080) et la poutre fixe (1180).

14. Imprimante numérique pour cuir selon l'une quelconque des revendications 8 à 9, **caractérisée en ce que** le support rigide (107) comprend:
- une multitude de prismes étant raccordés entre eux afin de former un anneau de prismes (308).

15. Imprimante numérique pour cuir selon l'une quelconque des revendications 10 à 14, **caractérisée en ce que** l'imprimante numérique pour cuir est une imprimante à jet d'encre à rayonnement UV et que la peau (402) est du cuir en croûte (136).

16. Utilisation d'une unité de serrage afin d'obtenir une zone de décoration plate d'une peau (402) sur un support rigide (107) d'une imprimante à jet d'encre en serrant un bord de la peau face au côté de la zone de décoration plate orientée vers une unité de têtes d'impression à jet d'encre (607).
